# EUROPEAN PATENT APPLICATION

(11) **EP 4 733 838 A1**
(43) Date of publication of application: **29.04.2026**
(21) Application number: 24827711.3
(22) Date of filing: 22.05.2024
(51) Int. Cl.: G02F 1/365

(54) **OPTICAL SPECTRUM GENERATION DEVICE, OPTICAL SPECTRUM AMPLIFICATION DEVICE, AND OPTICAL SPECTRUM GENERATION METHOD**

(30) Priority: 26.06.2023 JP 2023104462
(71) Applicant: NATIONAL UNIVERSITY CORPORATION TOKAI NATIONAL HIGHER EDUCATION AND RESEARCH SYSTEM, Nagoya-shi, Aichi 464-8601 (JP)
(72) Inventor: NISHIZAWA Norihiko, Nagoya-shi Aichi 464-8601 (JP); KITAJIMA Shotaro, Nagoya-shi Aichi 464-8601 (JP); JUNG Kwangyun, Nagoya-shi Aichi 464-8601 (JP)
(74) Representative: Seemann & Partner Patentanwälte mbB
(86) International application number: PCT/JP2024/018791
(87) International publication number: WO 2025/004622

(57) **Abstract**

An optical spectrum generator 1 comprises a pulsed light source 10 that generates pulsed light, an optical modulator 20 that modulates the pulsed light of a predetermined wavelength from the pulsed light source 1 and a nonlinear loop mirror 30 comprising an optical splitter 31 and a loop-shaped optical fiber 32 connected to two ends on the same side of the optical splitter 31. The optical modulator 20 is arranged on the loop of the nonlinear loop mirror 30. The optical fiber 32 of the nonlinear loop mirror 30 generates a peak in the pulsed light modulated by the optical modulator 20 due to a nonlinear effect. The optical path length from the optical splitter 31 to the optical modulator 20 is different when following the loop of the nonlinear loop mirror 30 in a clockwise direction and when following the loop of the nonlinear loop mirror 30 in a counterclockwise direction.

## Description

This disclosure relates to an optical spectrum generator, an optical spectrum amplifier and an optical spectrum generation method.

### BACKGROUND ART

A device for generating an optical spectrum with a linear peak using an optical waveguide is disclosed, see, for example, Patent Literature 1. This waveguide generates a peak at a predetermined wavelength by applying a nonlinear effect to pulsed light whose intensity and phase are modulated.

### RELATED-ART LITERATURE

### PATENT LITERATURE

Patent Literature 1: International Publication 2021/251365

### TECHNICAL PROBLEM

However, the technique disclosed in Patent Literature 1 leaves a relatively large pedestal components, also called pedestals or background components, backgrounds, etc., in the generated optical spectrum, resulting in problems such as weak effective optical spectrum intensity and small signal-to-background ratio (SBR).

The present disclosure was made in view of the above problem and a general purpose thereof is to generate an optical spectrum with fewer pedestal components and stronger intensity.

### SOLUTION TO PROBLEM

In order to solve the above problem, the optical spectrum generator of a certain aspect of the present disclosure comprises a pulsed light source that generates pulsed light, an optical modulator that modulates the pulsed light of a predetermined wavelength from the pulsed light source and a nonlinear loop mirror comprising an optical splitter and a loop-shaped optical fiber connected to two ends on the same side of the optical splitter. The optical modulator is arranged on the loop of the nonlinear loop mirror. The optical fiber of the nonlinear loop mirror generates a peak in the pulsed light modulated by the optical modulator due to a nonlinear effect. The optical path length from the optical splitter to the optical modulator is different when following the loop of the nonlinear loop mirror in a clockwise direction and when following the loop of the nonlinear loop mirror in a counterclockwise direction.

In one embodiment, the modulation of the pulsed light may be an intensity modulation.

In one embodiment, the modulation of the pulsed light may be a phase modulation.

In one embodiment, the optical modulator may generate modulation at a predetermined wavelength.

In one embodiment, the optical modulator generates modulation at a predetermined plurality of wavelengths.

In one embodiment, the predetermined plurality of wavelengths may be discretely and equally spaced.

In one embodiment, the optical modulator may modulate the pulsed light at a predetermined wavelengths to generate a dip and the nonlinear effect converts the dip into a peak.

In one embodiment, the optical fiber constituting the nonlinear loop mirror may be a highly nonlinear fiber.

In one embodiment, the optical fiber constituting the nonlinear loop mirror may be a small core fiber.

In one embodiment, the optical modulator may be a gas cell.

In one embodiment, the optical modulator may be a multipath cell.

In one embodiment, gas in the gas cell may be methane, ethane, hydrogen cyanide, carbon monoxide, carbon dioxide, acetylene, nitrogen oxide or water vapor, or a mixture of these gases.

In one embodiment, the optical modulator may be a spectrum controller, such as LCOS.

In one embodiment, the optical spectrum generator may further comprise a wavelength shift fiber that shifts the wavelength of the pulsed light from the pulsed light source.

In one embodiment, the optical spectrum generator may further comprise a first polarization controller that maintains the polarization state of the pulsed light input to the optical splitter and a second polarization controller that maintains the polarization state of the pulsed light output from the optical splitter.

In one embodiment, the optical fiber of the nonlinear loop mirror may be a polarization maintaining fiber.

In one embodiment, the optical fiber of the nonlinear loop mirror may be an anomalous dispersion single mode optical fiber.

In one embodiment, the ratio of the optical path length from the optical splitter to the optical modulator when following the loop of the nonlinear loop mirror in a clockwise direction to the optical path length from the optical splitter to the optical modulator when following the loop of the nonlinear loop mirror in a counterclockwise direction may be greater than 7 : 3 or less than 3 :7.

In one embodiment, the ratio of the optical path length from the optical splitter to the optical modulator when following the loop of the nonlinear loop mirror in a clockwise direction to the optical path length from the optical splitter to the optical modulator when following the loop of the nonlinear loop mirror in a counterclockwise direction may be greater than 9 : 1 or less than 1 : 9.

Another aspect of the present disclosure is an optical spectral amplifier. This optical spectral amplifier comprises an optical amplifier placed after the output of the optical splitter of any one of the optical spectrum generators mentioned above.

Yet another aspect of the present disclosure is an optical spectrum generation method. This method includes a step of generating pulsed light using a pulsed light source, a step of modulating the pulsed light of a predetermined wavelength from the pulsed light source using an optical modulator and a step of generating a peak in the pulsed light modulated by the optical modulator by a nonlinear effect of a nonlinear loop mirror comprising an optical splitter and a loop-shaped optical fiber connected to the two ends on the same side of the optical splitter. The optical path length from the optical splitter to the optical modulator is different when following the loop of the nonlinear loop mirror in a clockwise direction and when following the loop of the nonlinear loop mirror in a counterclockwise direction.

Any combination of the above components, and any transformation of the expression of the present invention among devices, methods, systems, recording media, computer programs, etc., is also valid as an aspect of the present disclosure.

### ADVANTAGEOUS EFFECTS OF INVENTION

According to the present disclosure, it is possible to generate an optical spectrum with low pedestal component and high intensity.

### BRIEF DESCRIPTION OF DRAWINGS

[FIG. 1] Fig. 1 is a schematic diagram of an optical spectrum generator according to the first embodiment;
[FIG. 2] Fig. 2 shows the absorption of methane, hydrogen cyanide (HCN), and water vapor (H₂O) at wavelengths from 1.3 µm to 2.0 µm;
[FIG. 3] Fig. 3 is a schematic diagram of a multi pass cell;
[FIG. 4] Fig. 4 is a photograph of a multi pass cell;
[FIG. 5] Fig. 5 is a schematic diagram of the pulsed light input to each terminal of the optical splitter and the pulsed light output from each terminal;
[FIG. 6] Fig. 6 shows the schematic waveforms in Fig. 5 overlaid with the waveforms obtained in the simulation;
[FIG. 7] Fig. 7 is a schematic diagram of an optical spectrum generator configured by using a highly nonlinear fiber;
[FIG. 8] Fig. 8 is a schematic diagram of an optical spectrum generator configured by using a spectrum controller;
[FIG. 9] Fig. 9 shows the modulation of each spectrum by the spectrum controller;
[FIG. 10] Fig. 10 is a schematic diagram of an optical spectrum amplifier according to the second embodiment;
[FIG. 11] Fig. 11 is a flowchart showing the processing steps of an optical spectrum generation method according to the third embodiment;
[FIG. 12] Fig. 12 is a schematic diagram showing the experimental system of Experiment 1 using the optical spectrum generator of Fig. 1;
[FIG. 13] Fig. 13 a photograph showing the measurement data obtained in Experiment 1;
[FIG. 14] Fig. 14 a photograph showing the measurement data obtained in Experiment 1;
[FIG. 15] Fig. 15 a photograph showing the measurement data obtained in Experiment 1;
[FIG. 16] Fig. 16 a photograph showing the measurement data obtained in Experiment 1;
[FIG. 17] Fig. 17 is a graph showing the peak intensity of the light spectrum output from the nonlinear loop mirror and the signal-to-background ratio when the input power of the pulsed light input to the nonlinear loop mirror is changed, experimental result;
[FIG. 18] Fig. 18 is a graph showing the peak intensity of the light spectrum output from the nonlinear loop mirror and the signal-to-background ratio when the input power of the pulsed light input to the nonlinear loop mirror is changed, calculation result;
[FIG. 19] Fig. 19 is a graph showing the input power dependence of the peak intensity of the optical spectrum when the fiber length of the nonlinear loop mirror is 30 m;
[FIG. 20] Fig. 20 is a graph showing the input power required when the peak intensity of the optical spectrum reaches its maximum value when the fiber length of the nonlinear loop mirror is changed;
[FIG. 21] Fig. 21 is a graph showing the peak intensity of the optical spectrum output from the nonlinear loop mirror versus the signal-to-background ratio when the fiber length of the nonlinear loop mirror is changed, an experimental result;
[FIG. 22] Fig. 22 shows a result of the measurement by changing the position of the CH₄ gas cell from OPL1 = 1 m and OPL2 = 9 m to OPL1 = 3 m and OPL2 = 7 m in the experimental system in Figure 12;
[FIG. 23] Fig. 23 is a schematic diagram showing the experimental system of Experiment 2 using the optical spectrum generator of Fig. 1;
[FIG. 24] Fig. 24 is a photograph showing the waveform and intensity of the optical spectrum when the second gas cell is not passed through;
[FIG. 25] Fig. 25 is a photograph showing the waveform and intensity of the optical spectrum when the second gas cell is not passed through;
[FIG. 26] Fig. 26 is a photograph showing the waveform and intensity of the optical spectrum when the second gas cell is passed through;
[FIG. 27] Fig. 27 is a photograph showing the waveform and intensity of the optical spectrum when the second gas cell is passed through;
[FIG. 28] Fig. 28 shows the waveform when the second gas cell is passed, represented by lines, overlaid with the data when the second gas cell is not passed, represented by dots;
[FIG. 29] Fig. 29 is an enlarged view of the area near zero spectral intensity in Fig. 28;
[FIG. 30] Fig. 30 shows a simulation result when a regular nonlinear fiber is used as the optical fiber that constitutes the nonlinear loop mirror;
[FIG. 31] Fig. 31 shows a simulation result when a small core fiber is used as the optical fiber that constitutes the nonlinear loop mirror;
[FIG. 32] Fig. 32 shows a simulation result when a highly nonlinear fiber is used as the optical fiber that constitutes the nonlinear loop mirror;
[FIG. 33] Fig. 33 shows the modulation of each spectrum by the spectrum controller;
[FIG. 34] Fig. shows the absorption of pulsed light when passing through the gas cell of a multipath cell;
[FIG. 35] Fig. 35 shows the pulsed light converted from the dips in Fig. 34 to peaks by the highly nonlinear fiber;
[FIG. 36] Fig. 36 shows the spectrum of the pulsed light interfered by a nonlinear loop mirror configured with a highly nonlinear fiber;
[FIG. 37] Fig. 37 is a graph showing the result of phase control by the spectrum controller;
[FIG. 38] Fig. 38 is a graph showing the result of intensity control by the spectrum controller;
[FIG. 39] Fig. 39 is a graph showing the result of phase control by the spectrum controller;
[FIG. 40] Fig. 40 shows the spectrum of the pulsed light before input to the optical splitter;
[FIG. 41] Fig. 41 shows the spectrum of the pulsed light before input to the optical splitter;
[FIG. 42] Fig. 42 shows the spectrum of the pulsed light before input to the optical splitter;
[FIG. 43] Fig. 43 shows the spectrum of the pulsed light output from the optical splitter;
[FIG. 44] Fig. 44 the spectrum of the pulsed light output from the optical splitter;
[FIG. 45] Fig. 45 the spectrum of the pulsed light output from the optical splitter.

### DESCRIPTION OF EMBODIMENTS

The disclosure will be described below with reference to the respective drawings based on suitable embodiments. In the embodiments and variants, identical or equivalent components and parts shall be marked with the same symbols, and duplicated explanations will be omitted where appropriate. The dimensions of parts in each drawing are shown enlarged or reduced as appropriate for ease of understanding. In each drawing, some elements that are not important in explaining the form are omitted. Terms including ordinal numbers such as first and second are used to describe a variety of components, however these terms are used only to distinguish one component from another, and the components are not limited by these terms.

Before describing the specific implementation, the basic findings are explained. The inventors have discovered that when pulsed light having a sudden drop in light intensity in the spectrum, hereinafter referred to as "dip", is passed through an optical waveguide, the light intensity at the wavelength of the dip changes periodically according to the optical path length of the optical waveguide, and the dip and the peak appear alternately. This phenomenon is also called spectral peaking. By passing a pulsed light that has a dip generated by an optical modulator or the like through an optical waveguide with an appropriate optical path length, the dip can be converted into a peak by the effect of spectral peaking, and an optical spectrum with a linear peak can be generated, see, for example, Patent Literature 1.

However, since a relatively large pedestal component remains in the optical spectrum generated in this way, there is still room for improvement in terms of weak effective optical spectrum intensity and small signal-to-background ratio.

### The first embodiment

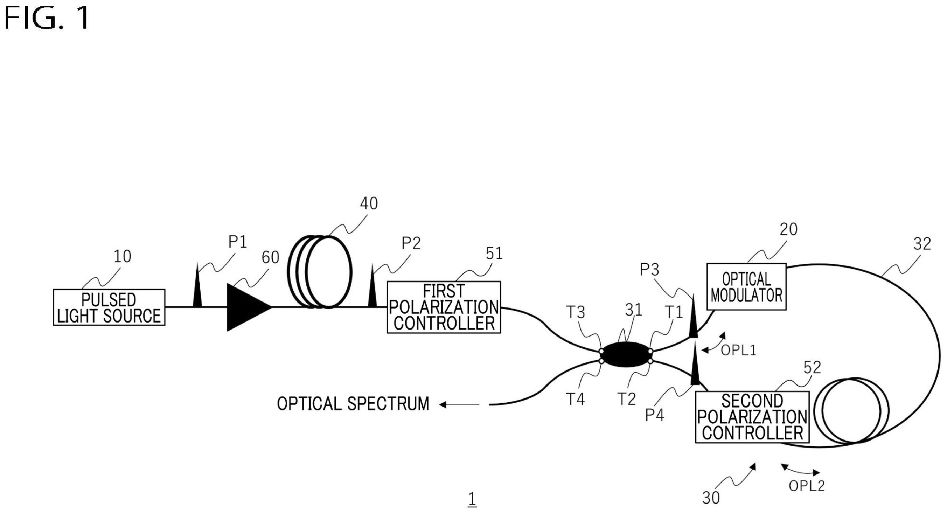

Figure 1 is a schematic diagram of an optical spectrum generator 1 according to the first embodiment. The optical spectrum generator 1 comprises a pulsed light source 10, an optical modulator 20 and a nonlinear loop mirror 30. The nonlinear loop mirror 30 comprises an optical splitter 31 and a loop-shaped optical fiber 32 connected to two terminals, a terminal T1 and a terminal T2, on the same side of the optical splitter 31.

The optical modulator 20 is arranged on a loop of the nonlinear loop mirror 30. The optical fiber 32 of the nonlinear loop mirror 30 generates a peak in the pulsed light modulated by the optical modulator 20 due to a nonlinear effect.

The optical modulator 20 may be an optical intensity modulator that modulates the intensity of the light or an optical phase modulator that modulates the phase of the light.

The optical splitter 31 is a device capable of splitting light entering one optical fiber into two outgoing lights, or conversely combining lights entering two optical fibers into one outgoing light, and may be an optical coupler, a 2 x 2 fiber coupler, a cube beam splitter, a plate beam splitter, etc. can be applied.

The optical path length from the optical splitter 31 to the optical modulator 20 differs when following the loop of the nonlinear loop mirror 30 clockwise and counterclockwise. Specifically, the optical path length OPL1 between the optical splitter 31 and the optical modulator 20 when the pulsed light output from the terminal T1 of the optical splitter 31 follows the loop in a clockwise direction and the optical path length OPL2 between the optical splitter 31 and the optical modulator 20 when the pulsed light output from the terminal T2 of the optical splitter 31 follows the loop in a counterclockwise direction is different. In the example in Figure 1, OPL1 < OPL2.

The optical spectrum generator 1 further comprises a wavelength shift fiber 40, a first polarization controller 51, a second polarization controller 52 and an optical amplifier 60. However, these components are not essential for implementing the present disclosure. In particular, the first polarization controller and the second polarization controller are not required when the optical fiber 32 is constituted by polarization maintaining fibers.

The pulsed light source 10 is a light source that generates light with a narrow pulse width (time width). For example, a fiber laser with a ring-shaped resonator can be used. The time width, i.e., full width at half maximum, of the pulsed light is, for example, 10 fs to 100 ps. It is also possible to use an optical frequency comb light source that outputs an optical frequency comb.

The pulse shape of the pulsed light is arbitrary, for example, sech² type, soliton, Gaussian and super Gaussian. The sech² type is particularly preferred because it is possible to obtain clearer and more well-formed linear peaks.

The optical amplifier 60 amplifies the optical intensity of the pulsed light from the pulsed light source 10. The optical amplifier 60 can be a rare earth doped optical fiber amplifier, for example, an erbium doped fiber amplifier. Since the nonlinear effect of the optical fiber 32 of the nonlinear loop mirror 30 in the latter stage occurs above a certain light intensity, it is advantageous to amplify the light intensity using the optical amplifier 60. The period of spectral peaking also depends on the optical intensity. Therefore, the period of spectral peaking can be adjusted by the amplification factor in the optical amplifier 60.

The first polarization controller and the second polarization controller change the polarization state, such as by externally applying stress to the optical fiber. These polarization controllers can be configured using elements that can control polarization, such as a quarter-wave plate or half-wave plate.

The wavelength shift fiber 40 shifts the wavelength of the pulsed light from the optical amplifier 60. This adjusts the position of the absorption peak by the optical modulator 20 in the subsequent stage with respect to the spectrum of the pulsed light. For example, the peak wavelength of the pulsed light is adjusted to be near the wavelength of the absorption peak. Since the amount of wavelength shift in the wavelength shift fiber 40 depends on the light intensity, the amount of wavelength shift can be controlled by the optical amplifier 60. For example, polarization maintaining fiber, PANDA fiber, can be used for the wavelength shift fiber 40.

The optical modulator 20 functions as a filter that generates narrow band absorption for the pulsed light from the wavelength shift fiber 40 and generates a linear dip in the spectrum of the pulsed light. The number of dips generated is not limited to one, but may be multiple. By generating dips aligned at equal intervals, spectral peaking can generate a spectrum with linear peaks aligned at equal intervals. The wavelength of the dip may be any wavelength within the wavelength band of the pulsed light. However, in order to sufficiently increase the intensity of the peaks, a wavelength near the center wavelength is preferred.

As explained above, the optical modulator 20 may generate modulation at a predetermined wavelength, such as an absorption peak due to an internal gas. This predetermined wavelength may be multiple. Furthermore, this plurality of predetermined wavelengths may be discrete and equally spaced. In this case, the spacing may not be strictly equally spaced, but may have an error in spacing, such as several 10%, for example.

The spectral shape of the dip by the optical modulator 20 is arbitrary, however a Lorentz type, a Gaussian type or a sech² type is preferred. These spectral shapes provide more well-formed and clearer peaks.

The spectral width, i.e., full width at half maximum, of the pulsed light should be at least twice the spectral width, i.e., full width at half maximum, of the dip. By setting the spectral width of the pulsed light or the spectral width of the dip in this way, spectral peaking can be generated. The spectral width of the dip is arbitrary as long as it meets this range, however it is desirable to be, for example, 10 nm or less, more preferably 1 nm or less.

The absorption ratio in the dip is arbitrary, however it is desirable to have an absorption of 50% or more, preferably 70% or more, and even more preferably 90% or more to sufficiently increase the light intensity of the peak.

The optical modulator 20 is arbitrary as long as it has a narrow band absorption peak, and can be a gas cell filled with gas, a diffraction grating or a photonic crystal, etc.

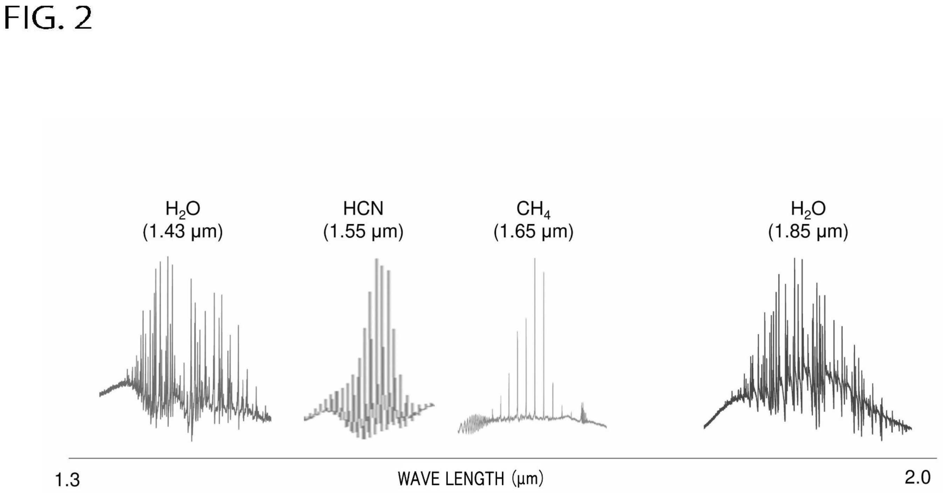

When the optical modulator 20 is configured with a gas cell, the gas of the gas cell can be any gas that generates narrow-band absorption for the pulsed light from the wavelength shift fiber 40. In particular, the absorption of gases such as methane (CH₄), ethane (C₂H₆), carbon monoxide (CO), carbon dioxide (CO₂), acetylene (C₂H₂) and nitrogen oxide (NOₓ) have numerous absorption peaks at equal intervals, so that a spectrum with equally spaced linear peaks can be generated. Figure 2 shows the absorption at wavelengths from 1.3 µm to 2.0 µm when methane, hydrogen cyanide (HCN) and water vapor (H₂O) are used as gases in the gas cell.

Furthermore, the gas in the gas cell may be a single gas such as methane, ethane, hydrogen cyanide, carbon monoxide, carbon dioxide, acetylene, nitrogen oxides or water vapor, or a mixture of these gases.

When the optical modulator 20 is configured with a gas cell, a multi pass type gas cell, hereinafter referred to as "multi pass cell", can be used.

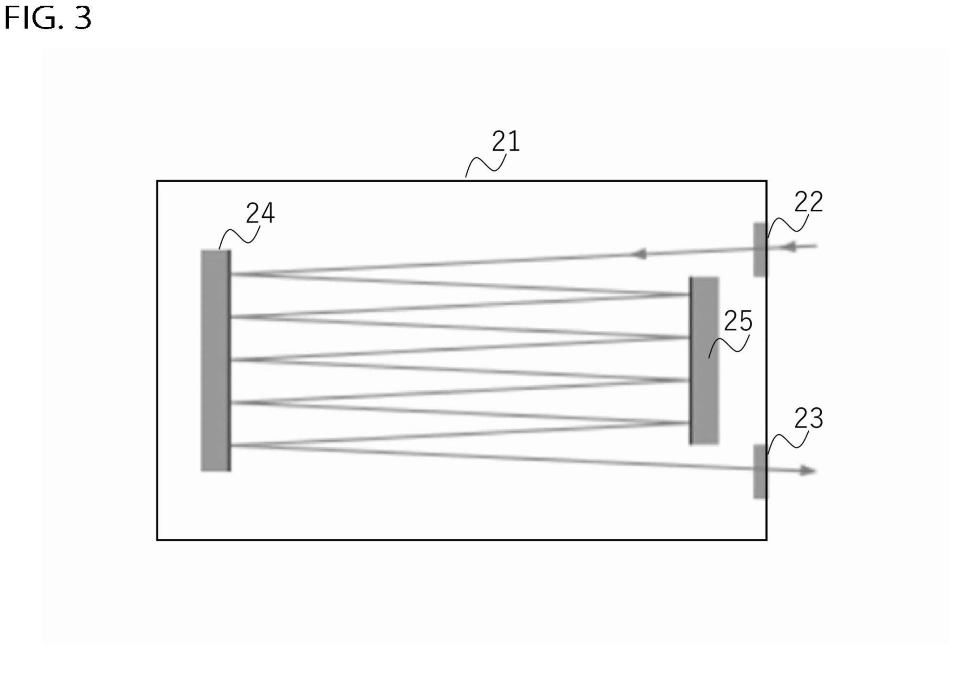

Figure 3 is a schematic diagram of a multi pass cell 21. The multi pass cell 21 has an input port 22, an output port 23, a mirror 24 and a mirror 25. The interior of the multi pass cell 21 is filled with a gas having a predetermined absorption peak for light entering from the input port 22. Light entering the multi pass cell 21 from the input port 22 is reflected multiple times between the mirror 24 and the mirror 25 and then exits from the output port 23. By using two mirrors, the mirror 24 and the mirror 25, in the multipath cell 21 in this way, the optical path can be multiplexed, thus increasing the effective optical path length. In the example in Figure 3, an optical path length that is 10 times longer can be obtained. This allows for stronger absorption with the same amount of gas.

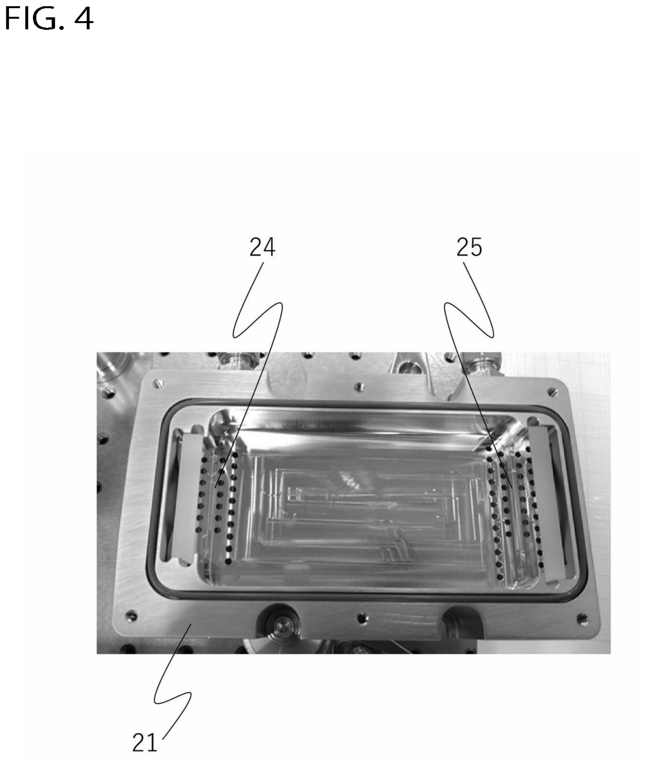

Figure 4 is a photograph of an actual multipath cell.

The optical splitter 31 of the nonlinear loop mirror 30 is a device that has four terminals for optical input and output and is capable of splitting the incoming light from one fiber into two outgoing lights, or conversely combining two lights into one. In the embodiment, the light input to the terminal T3 is split within the optical splitter 31 and output from the terminal T1 and the terminal T2, respectively. Meanwhile, for light input to terminals T1 and T2, the sum of these two lights is output from the terminal T3 and the difference between these two lights is output from the terminal T4.

The optical fiber 32 of the nonlinear loop mirror 30 is connected to the terminal T1 and the terminal T2 of the optical splitter 31 to form a loop. The optical fiber 32 generates a peak in the pulsed light modulated by the optical modulator 20 due to a nonlinear effect. This nonlinear effect changes the light intensity at the wavelength of the dip, converting the dip into a peak.

In other words, the optical modulator 20 may modulate the pulsed light at a predetermined wavelength to generate a dip, and the nonlinear effect of the optical fiber 32 may convert this dip into a peak.

In Figure 1, the nonlinear loop mirror 30 is constituted using the optical fiber 32, however it may be constituted using any material that propagates pulsed light and generates nonlinear effects in the pulsed light. The nonlinear loop mirror 30 may be constituted using, for example, a planar optical waveguide or a rectangular optical waveguide instead of an optical fiber. Photonic crystal structures may also be used.

In particular, when the material generating the nonlinear effect is an optical fiber, it is desirable to use an anomalous dispersion single mode optical fiber. This is because an anomalous dispersion single mode optical fiber can shape the waveform into a soliton, which makes the shape of the generated peak more well-formed and clearer.

When the material that generates the nonlinear effect is an optical fiber, polarization maintaining fiber may be used. In this case, there is no need to have a polarization controller in the device.

The operation of the optical spectrum generator 1 is described below with reference to Fig. 1. The pulsed light P1 generated by the pulsed light source 10 has wavelength WL1. The pulsed light P1 is amplified by the optical amplifier 60 and then input to the wavelength shift fiber 40. Pulsed light P1 becomes pulsed light P2 whose wavelength is shifted from WL1 to WL2 by wavelength shift fiber 40. The wavelength WL2 of the pulsed light P2 corresponds to the absorption peak by the optical modulator 20 in the latter stage.

The pulsed light P2 is input to the terminal T1 of the optical splitter 31 after its polarization state is adjusted by the first polarization controller PC1. The pulsed light P2 is split into two pulsed lights by the optical splitter 31.

One of the pulsed light P3, which is split by the optical splitter 31, is output from terminal T1 and input to the optical fiber 32. The pulsed light P3 follows the loop of the optical fiber 32 in a clockwise direction, passing through the optical modulator 20 and the second polarization controller 52 and enters the terminal T2 of the optical splitter 31.

A linear dip occurs in the pulsed light P3 by the optical modulator 20. The pulsed light P3 then passes through the optical fiber 32, and the dip is converted to a peak due to nonlinear effects. Note that OPL1 < OPL2, where OPL1 is the optical path length between the terminal T1 and the optical modulator 20, and OPL2 is the optical path length between the terminal T2 and the optical modulator 20. In other words, the pulsed light P3 passes through the optical fiber 32 with a long enough optical path length to reach the terminal T2 after being output from the optical modulator 20. Therefore, the pulsed light P3 has a sufficiently large intensity peak when it reaches the terminal T2. However, the pulsed light P3 that reaches the terminal T2 has a pedestal component.

The other pulsed light P4, which is split by the optical splitter 31, is output from the terminal T2 and enters the optical fiber 32. The pulsed light P4 follows the loop of the optical fiber 32 in a counterclockwise direction, passing through the second polarization controller 52 and the optical modulator 20 and enters the terminal T1 of the optical splitter 31.

A linear dip occurs in the pulsed light P4 by the optical modulator 20. The pulsed light P4 then passes through the optical fiber 32, however because the OPL1, optical path length between the terminal T1 and the optical modulator 20, is sufficiently short, it is subject to only slight nonlinear effects. Thus, the pulsed light P4 has a slight peak or still has a dip when it reaches the terminal T1. The pulsed light P3 that has reached the terminal T1 has a pedestal component, as does the pulsed light P4 that has reached the terminal T2.

The pulsed light P3 that entered the terminal T2 and the pulsed light P4 that entered the terminal T1 are combined by optical splitter 31. The sum of the pulsed light P3 and the pulsed light P4 is then output from terminal T3, and the difference between the pulsed light P3 and the pulsed light P4 is output from the terminal T4.

The pedestal component of the pulsed light P3 cancels out the pedestal component of the pulsed light P4 in the light output from the terminal T4, therefore the light output from the terminal T4 is an optical spectrum that has no pedestal component or a reduced pedestal component. Furthermore, for the light output from the terminal T4, the dip of pulsed light P4 is subtracted from the peak of pulsed light P3, resulting in an optical spectrum with a strong peak intensity.

On the other hand, for the light output from the terminal T3, the pedestal components of the pulsed light P3 and of the pulsed light P4 are intensified together, resulting in an optical spectrum with strong pedestal components. Furthermore, the light output from the terminal T3 has almost no peak because the peak of the pulsed light P3 cancels out the dip of the pulsed light P4.

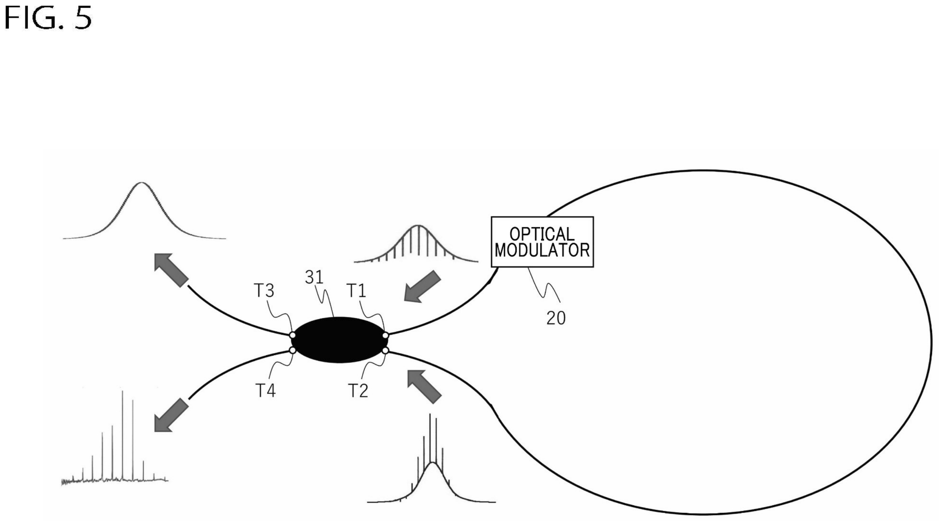

Figure 5 schematically shows the pulsed light input to the terminal T1 and the terminal T2 of the optical splitter 31 and the pulsed light output from the terminal T3 and the terminal T4.

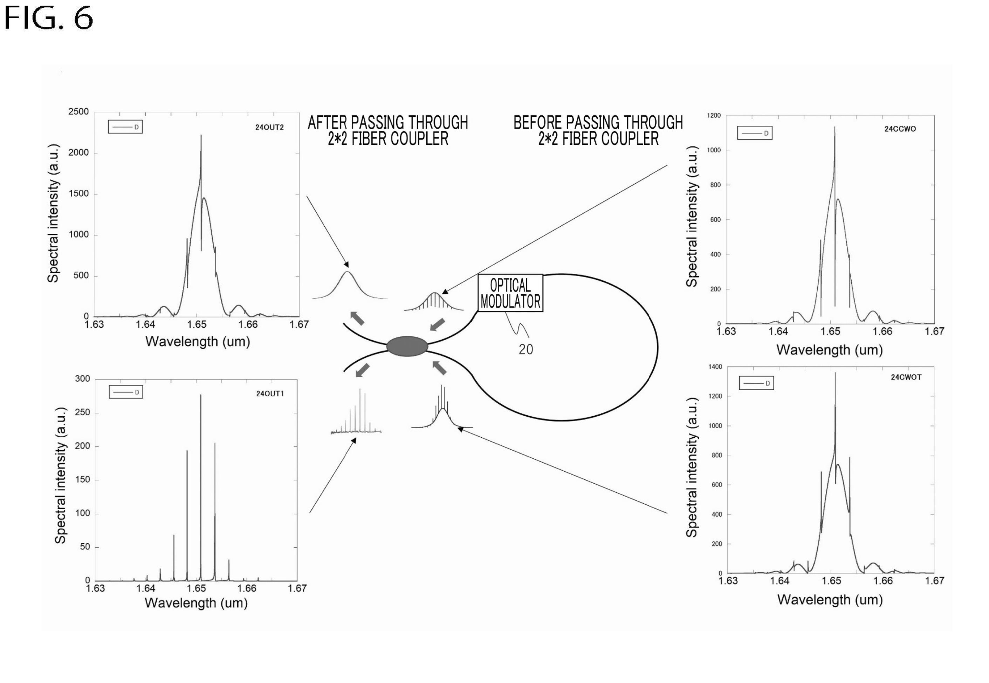

Figure 6 shows the schematic waveforms in Figure 5 overlaid with the waveforms obtained in the simulation.

According to the embodiment, it is possible to generate a light spectrum with a low pedestal component and high intensity.

The optical fiber 32 constituting the nonlinear loop mirror 30 may be a highly nonlinear fiber (HNLF) or a small core fiber (SCF) instead of a regular nonlinear fiber. The highly nonlinear fiber can be, for example, a normal dispersion highly nonlinear fiber with core diameter = 3 µm and second order wavelength dispersion β₂ = 6.4 ps²/km, wavelength 1.55 µm.

For example, a normal dispersion highly nonlinear fiber with core diameter = 3 µm and second order wavelength dispersion β₂ = 6.4 ps²/km, wavelength 1.55 µm, can be used for a highly nonlinear fiber.

For example, a small core fiber with core diameter = 6 µm and second order wavelength dispersion β₂ = - 16 ps²/km, wavelength 1.55 µm, can be used for a small core fiber.

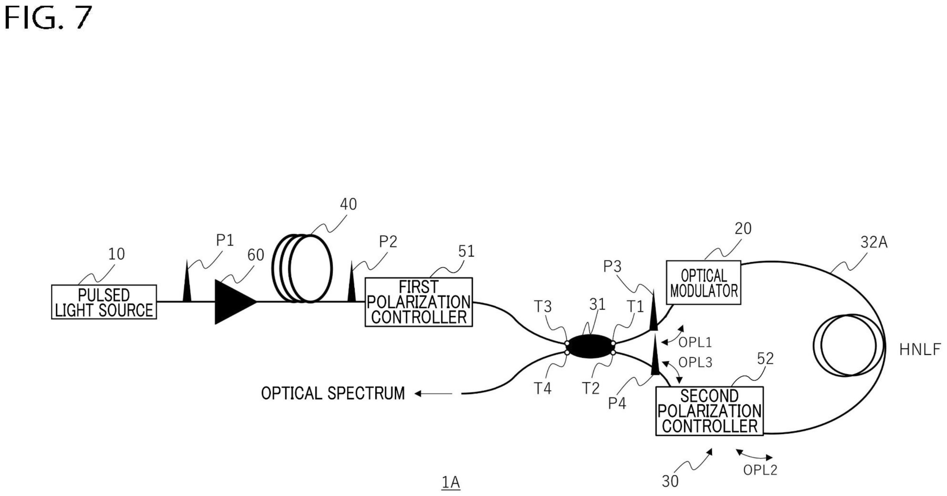

Figure 7 shows a schematic diagram of an optical spectrum generator 1A configured with a highly nonlinear fiber 32A. The optical spectrum generator 1A comprises a pulsed light source 10, an optical modulator 20, a nonlinear loop mirror 30, a first polarization controller 51 and a second polarization controller 52. The nonlinear loop mirror 30 comprises an optical splitter 31 and a loop-shaped optical fiber 32A connected to two terminals, a terminal T1 and a terminal T2, on the same side of the optical splitter 31. The optical spectrum generator 1A has the same configuration as the optical spectrum generator 1 of Fig. 1, however it differs in that the optical fiber 32A constituting the nonlinear loop mirror 30 is a highly nonlinear fiber.

Furthermore, it should be noted that in the case of the optical spectrum generator 1A using the highly nonlinear fiber 32A, OPL1 and OPL3 is approximately equal, where OPL1 is the optical path length between the optical splitter 31 and the optical modulator 20 when the pulsed light output from the terminal T1 of the optical splitter 31 follows the loop in a clockwise direction, and OPL3 is the optical path length between the optical splitter 31 and the optical modulator 20 when the pulsed light output from the terminal T2 of the optical splitter 31 follows the loop in a counterclockwise direction. In the case of the optical spectrum generator 1A using the highly nonlinear fiber 32A, the position of the optical modulator 20 as seen from the optical splitter 31 and the position of the second polarization controller 52 as seen from the optical splitter 31 are symmetrical in this way, which can produce an efficient interference effect.

Also in the case of an optical spectrum generator using a small core fiber, as in the case of a highly nonlinear fiber, an efficient interference effect can be produced when the position of the optical modulator 20 as seen from the optical splitter 31 and the position of the second polarization controller 52 as seen from the optical splitter 31 are symmetrical.

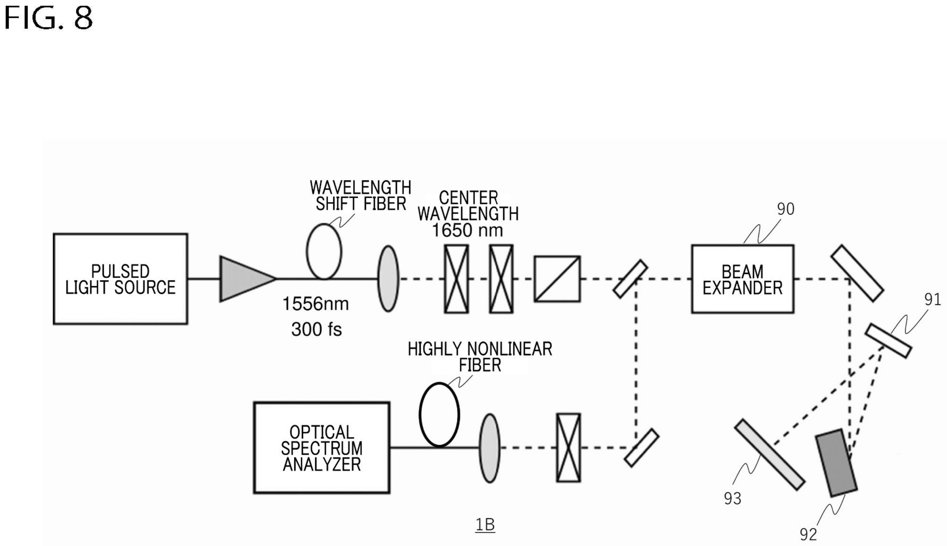

The optical modulator may be a spectral controller. Such a spectral controller may be configured using a spatial light modulator (SLM) such as LCOS (Liquid Crystal On Silicon) or a waveguide device. Figure 8 shows a schematic diagram of an optical spectrum generator 1B configured using a spectrum controller. The optical spectrum generator 1B comprises a beam expander 90, a concave mirror 91, a diffraction grating 92 and a spectrum controller 93. In this example, the spectrum controller 93 is configured using LCOS.

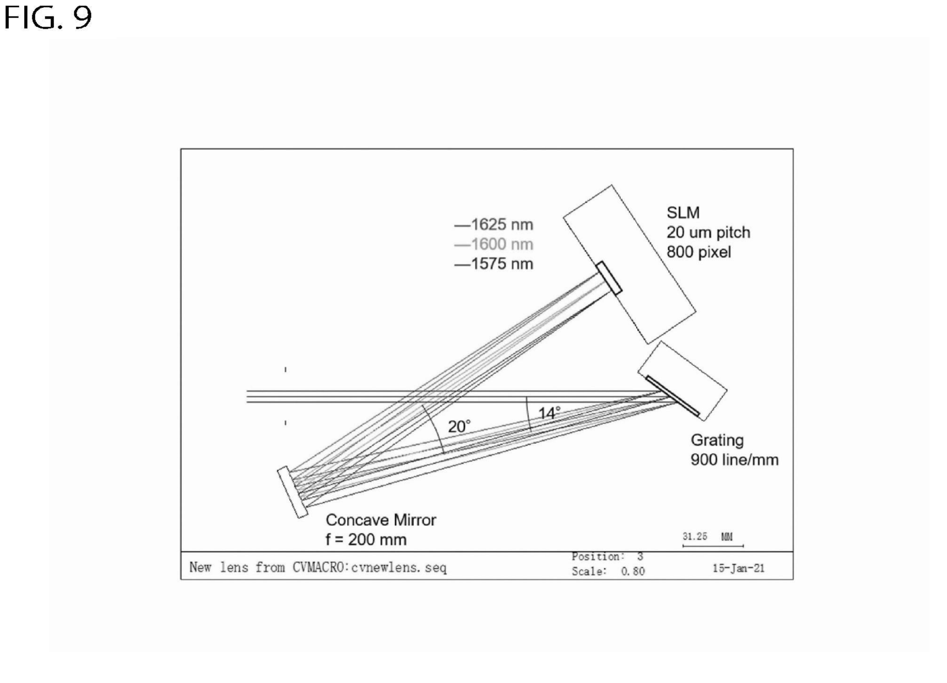

Figure 9 shows the modulation of each spectrum by the spectral controller. In this way, optical modulation can be performed on a spectrum-by-spectrum basis in this implementation.

### The second embodiment

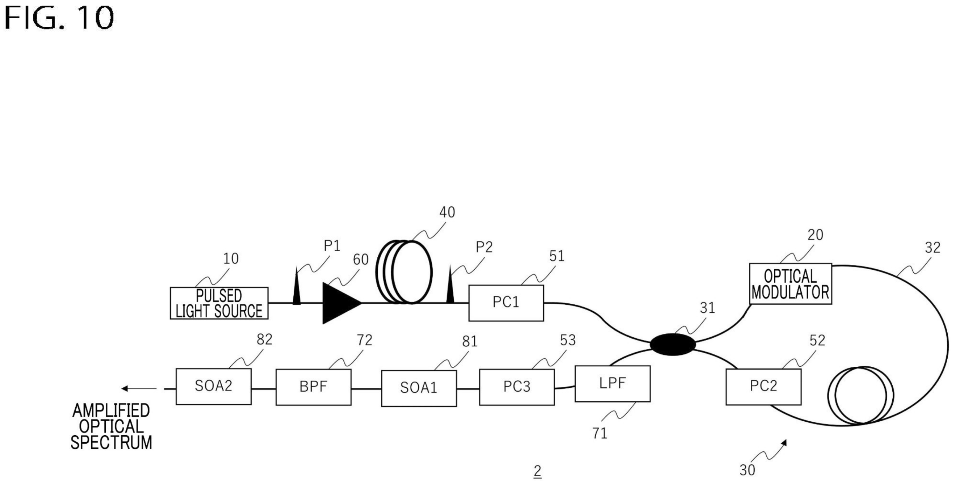

Figure 10 shows a schematic diagram of an optical spectrum amplifier 2 according to the second embodiment. The optical spectrum amplifier 2 comprises a pulsed light source 10, an optical modulator 20, a nonlinear loop mirror 30, a low pass filter 71, a third polarization controller 53, a first semiconductor optical amplifier 81, a band pass filter 72 and a second semiconductor optical amplifier 82. In other words, the optical spectrum amplifier 2 comprises a low-pass filter 71, a third polarization controller 53, a first semiconductor optical amplifier 81, a bandpass filter 72 and a second semiconductor optical amplifier 82, in addition to the configuration of the optical spectrum generator 1 in Figure 1. The other configurations of the optical spectrum amplifier 2 are common to those of the optical spectrum generator 1.

By configuring the optical spectrum amplifier 2 according to the embodiment, it is possible to generate an optical spectrum having a peak at a specific wavelength and amplify it.

### The third embodiment

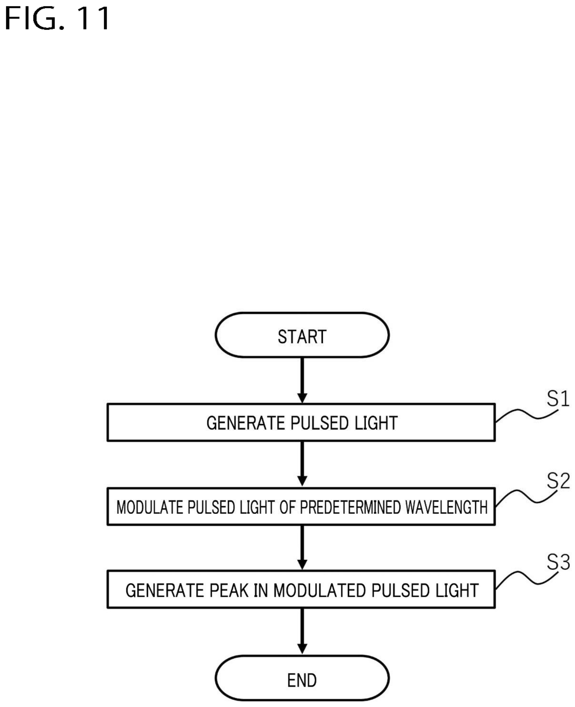

Figure 11 is a flowchart showing the processing steps of an optical spectrum generation method according to the third embodiment. This method includes a step S1 of generating pulsed light using a pulsed light source, a step S2 of modulating the pulsed light of a predetermined wavelength from the pulsed light source and a Step S3 of generating a peak in the pulsed light modulated by the optical modulator by a nonlinear effect of a nonlinear loop mirror comprising an optical splitter and a loop-shaped optical fiber connected to the two ends on the same side of the optical splitter. The optical path length from the optical splitter to the optical modulator differs when following the loop of the nonlinear loop mirror in a clockwise direction and when following it in a counterclockwise direction.

According to the embodiment, it is possible to generate a light spectrum with a low pedestal component and high intensity.

### Verification Experiments

To verify the effectiveness of the disclosure, the inventors conducted the following verification experiments.

### Experiment 1

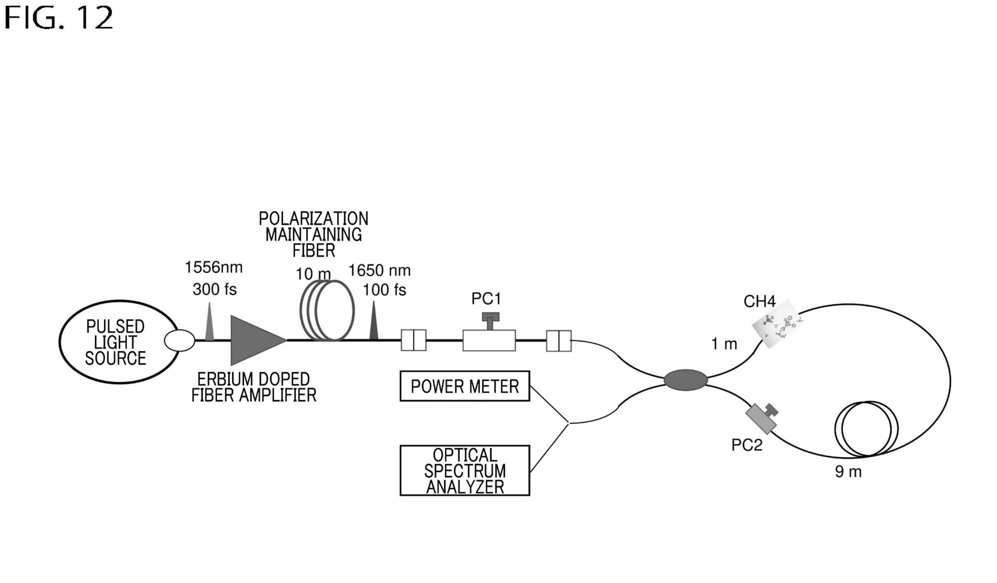

Figure 12 schematically shows the experimental system of Experiment 1 using the optical spectrum generator 1 in Figure 1. A fiber laser with a ring-shaped resonator using polarization maintaining erbium doped fiber and a single walled carbon nanotube was used as the pulsed light source. This pulsed light source output a sech² type pulsed light with a repetition rate of 50 MHz, a pulse width of 300 fs and a center wavelength of 1556 nm. An all polarization maintaining erbium doped fiber amplifier was used as the optical amplifier. An anomalous dispersion single mode polarization maintaining fiber was used as the wavelength shift fiber. The output of this optical amplifier was set to a pulse width of 100 fs and a center wavelength of 1650 nm. A gas cell filled with methane gas was used for the optical modulator 13. A single mode fiber with a total length of 10 m was used as the optical fiber of the nonlinear loop mirror. The optical modulator was placed at a position 1 m from the optical splitter when following the loop in a clockwise direction, in other words, at a position 9 m from the optical splitter when following the loop in a counterclockwise direction. In other words, OPL 1 : OPL2 = 1 : 9. An optical spectrum analyzer and a power meter were connected to the output from terminal T4 of the pulsed light to measure the shape of the optical spectrum and the optical intensity.

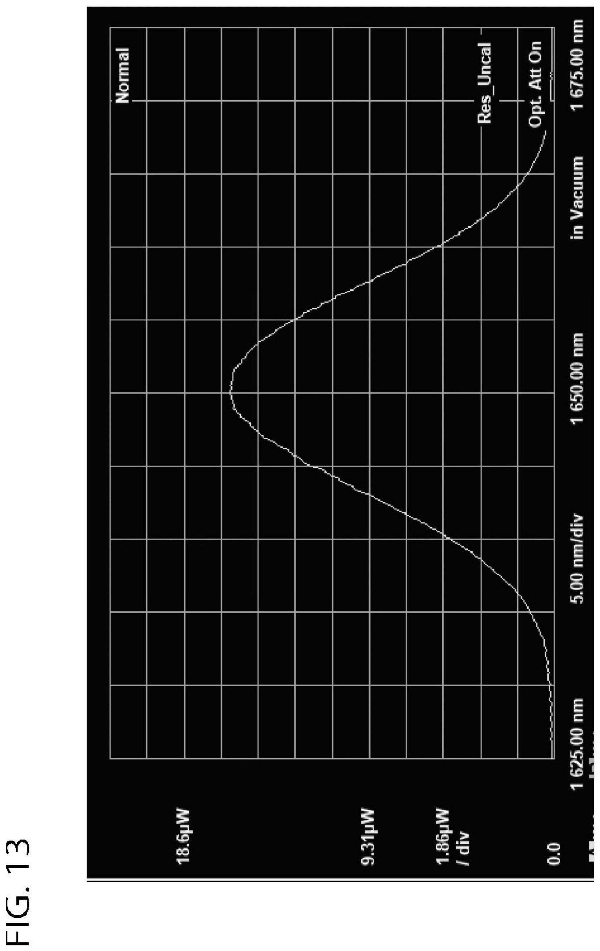

Figure 13 through Figure 16 are photographs showing the measurement data obtained in Experiment 1.

Figure 13 shows the waveform and the intensity of the pulsed light before input to the nonlinear loop mirror. As illustrated, this has a sech² type waveform with a center wavelength of 1650 nm.

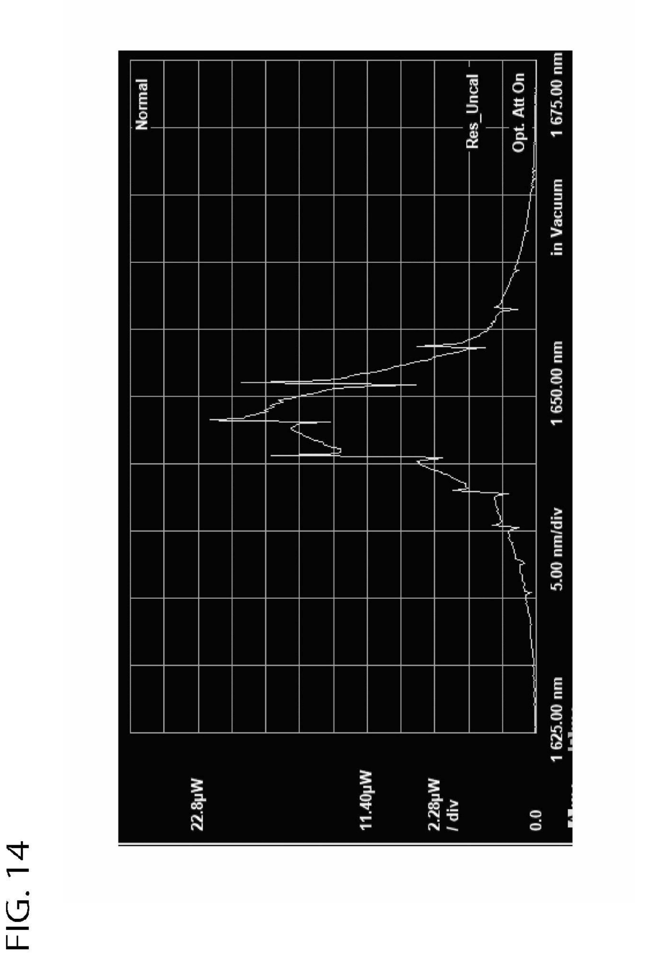

Figure 14 shows the waveform and the intensity of the pulsed light following the nonlinear loop mirror in a clockwise direction, just before it enters the terminal T2 of the optical splitter. It can be seen that, in contrast to the original sech² type waveform, after absorption in the gas cell, which produces equally spaced dips, the dips are converted to peaks due to nonlinear effects.

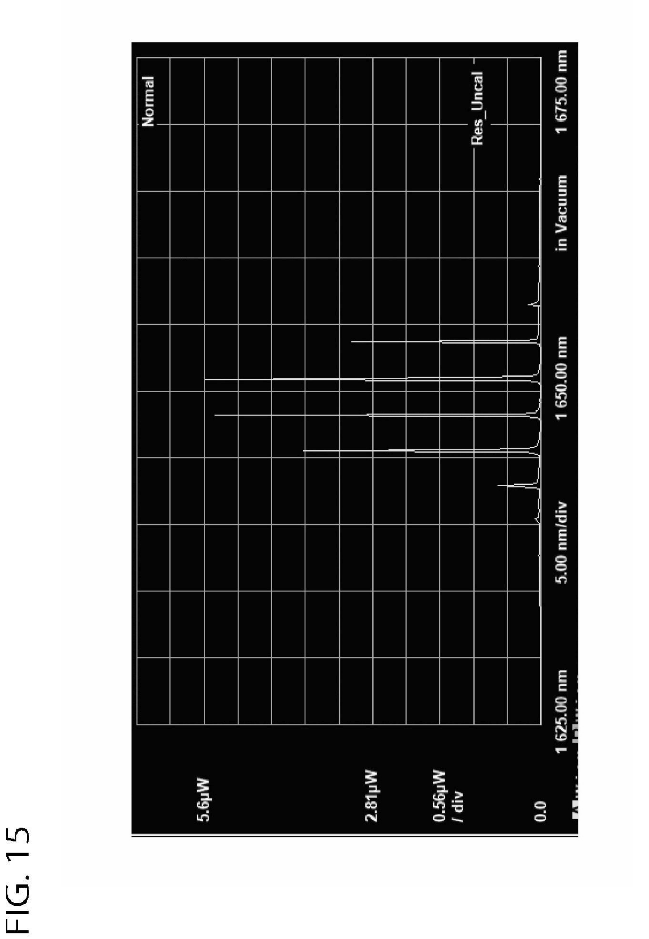

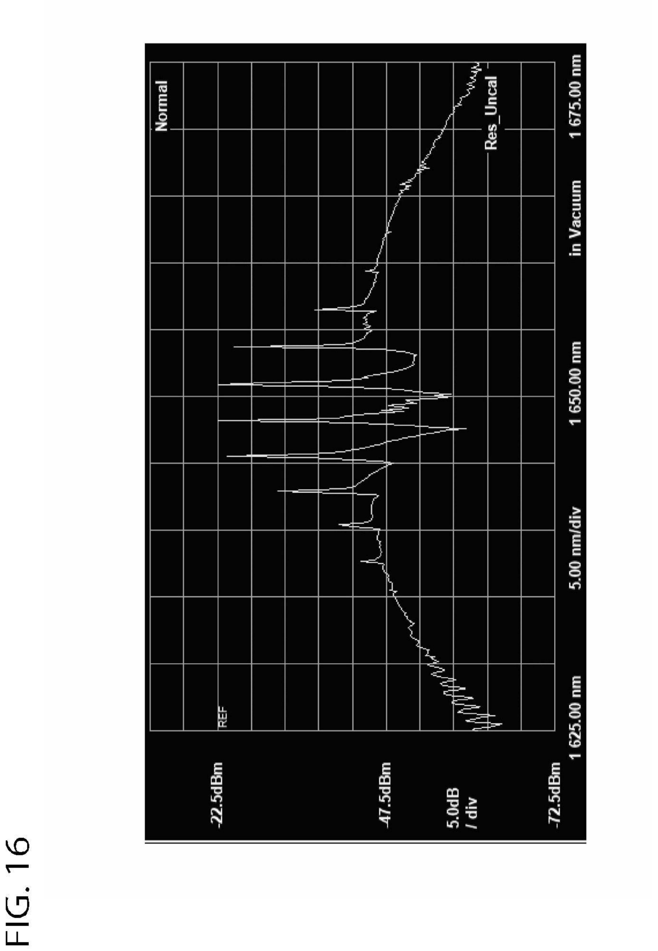

Figure 15 and Figure 16 show the waveform and the intensity of the optical spectrum output from the terminal T4 of the optical splitter. Figure 16 is a logarithmic representation of Figure 15. Comparing Figure 15 with Figure 14, it can be seen that in Figure 15, the pedestal component of Figure 14 is removed and only the peaks remain in the waveform. This is due to the fact that the pedestal components were removed by combining the pulsed light that followed the nonlinear loop mirror in a counterclockwise direction and the pulsed light that followed it in a clockwise direction and taking the difference component. As can be read from Figure 16, the output optical spectrum shows that a good signal-to-background ratio of 35 dB is obtained, since the signal intensity is -22.5 dBm and the pedestal component is -47.5 dBm.

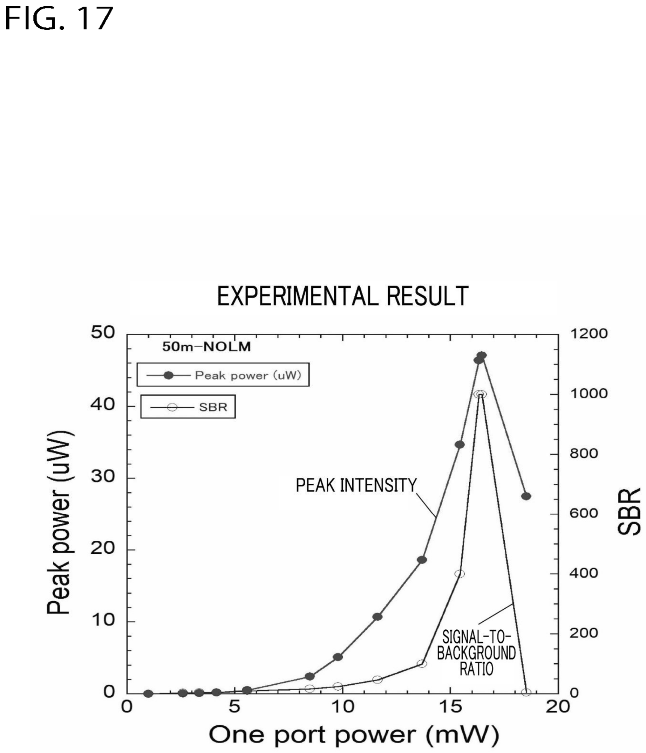

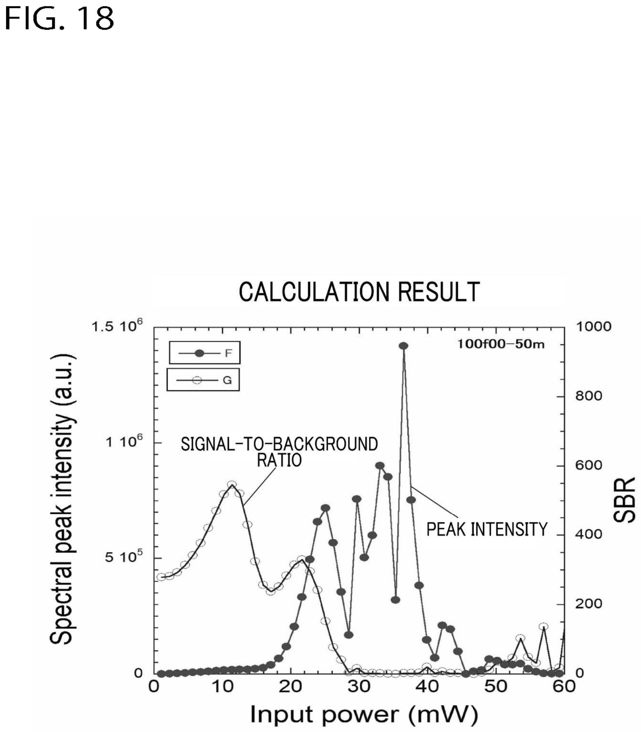

Figure 17 and Figure 18 show the peak intensity and signal-to-background ratio of the optical spectrum output from the nonlinear loop mirror when the input power of the pulsed light input to the nonlinear loop mirror is changed. Figure 17 shows an experimental result, and Figure 18 shows a calculated result from a simulation. In this experiment, the fiber length of the nonlinear loop mirror is set to 50 m in order to clearly observe the dependence of the peak intensity and signal-to-background ratio on the input power. Both the experimental result and the calculated result show that as the input power increases from 0, both peak intensity and signal-to-noise ratio increase and tend to decrease after reaching a maximum value. This shows that the input power can be tuned to an appropriate value to improve the peak intensity or signal-to-background ratio.

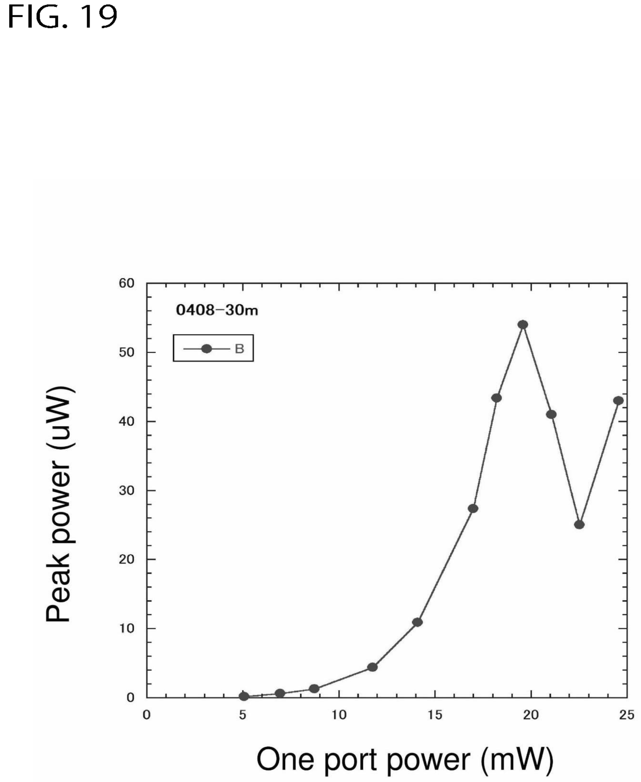

Figure 19 shows the input power dependence of the peak intensity of the optical spectrum when the fiber length of the nonlinear loop mirror is 30 m. Comparing Figure 19 with Figure 17, a similar trend can be seen in both figures.

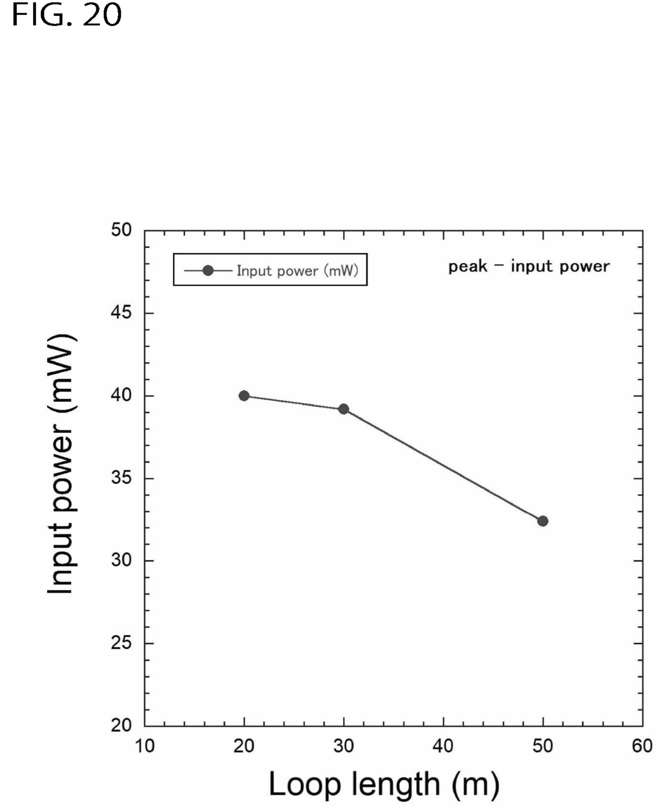

Figure 20 is a graph showing the input power required when the peak intensity of the optical spectrum reaches its maximum value for different fiber lengths of the nonlinear loop mirror. From Figure 20, it can be read that the shorter the fiber length, the greater the input power required. This may be due to the fact that the nonlinear effect on the pulsed light is generally expressed as the product of the fiber length and the input power.

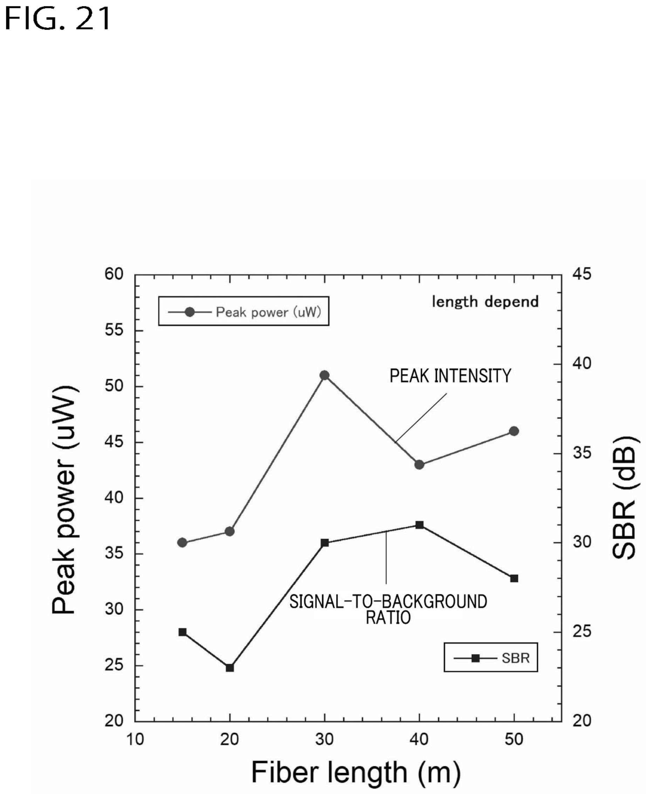

Figure 21 is a graph showing the peak intensity of the optical spectrum output from the nonlinear loop mirror versus the signal-to-background ratio when the fiber length of the nonlinear loop mirror is changed, an experimental result. As the fiber length increases, both the peak intensity and the signal-to-noise ratio increase and tend to decrease after reaching a maximum value. This shows that the fiber length can be tuned to an appropriate value to improve the peak intensity or signal-to-background ratio.

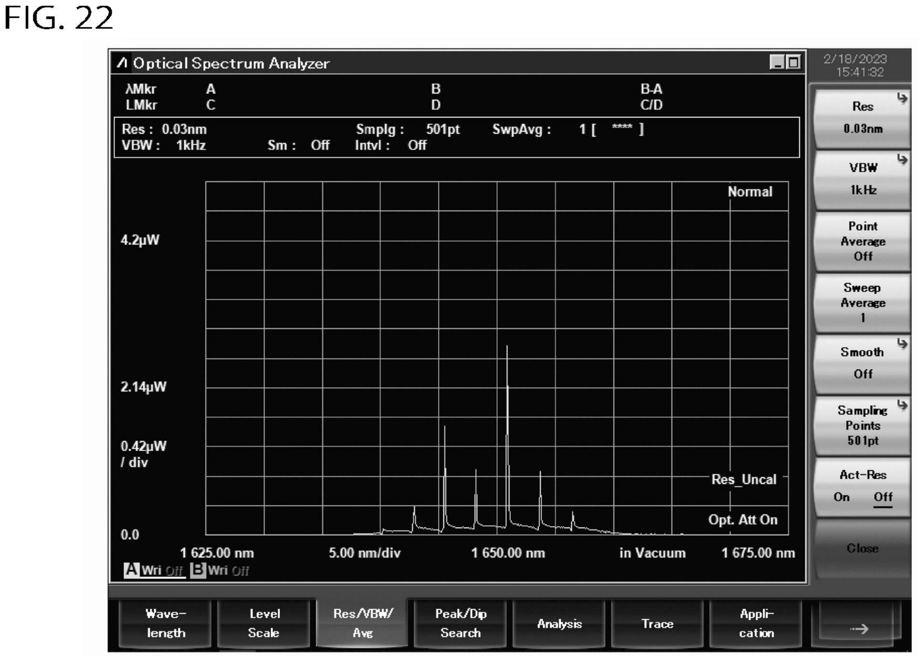

Figure 22 shows a result of the measurement by changing the position of the CH₄ gas cell from OPL1 = 1 m and OPL2 = 9 m to OPL1 = 3 m and OPL2 = 7 m in the experimental system in Figure 12. It can be seen that the effect of the reduction of the pedestal component is lower than that of OPL1 = 1 m and OPL2 = 9 m, however a certain effect is obtained.

This shows that for the optical path length from the optical splitter to the optical modulator, the desired effect is obtained if the ratio of the optical path length when following the loop of the nonlinear loop mirror in a clockwise direction to the optical path length when following it in a counterclockwise direction is greater than 7 : 3 or less than 3 : 7. Furthermore, the aforementioned experiments show that for the optical path length from the optical splitter to the optical modulator, the ratio of the optical path length when following the loop of the nonlinear loop mirror in a clockwise direction to the optical path length when following it in a counterclockwise direction is greater than 9 : 1 or smaller than 1 : 9, which is more desirable.

### Experiment 2

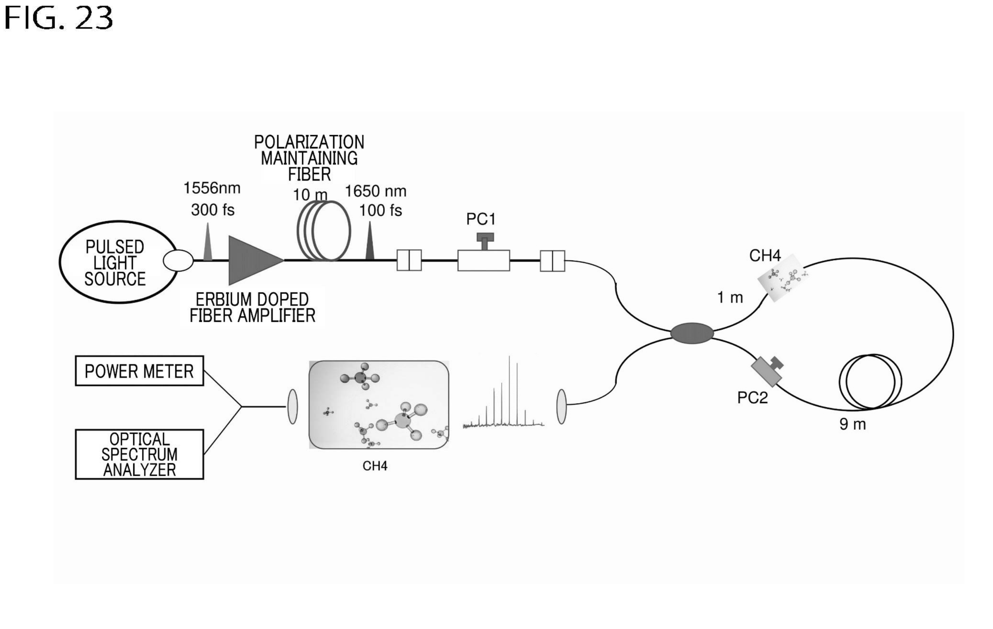

Figure 23 shows schematically the experimental system of Experiment 2 using the optical spectrum generator 1 of Figure 1. In contrast to the experimental system of Fig. 12, this experimental system has a second CH₄ gas cell placed after the terminal T4 of the optical splitter. The optical spectrum after passing through this second gas cell is observed using a power meter and an optical spectrum analyzer.

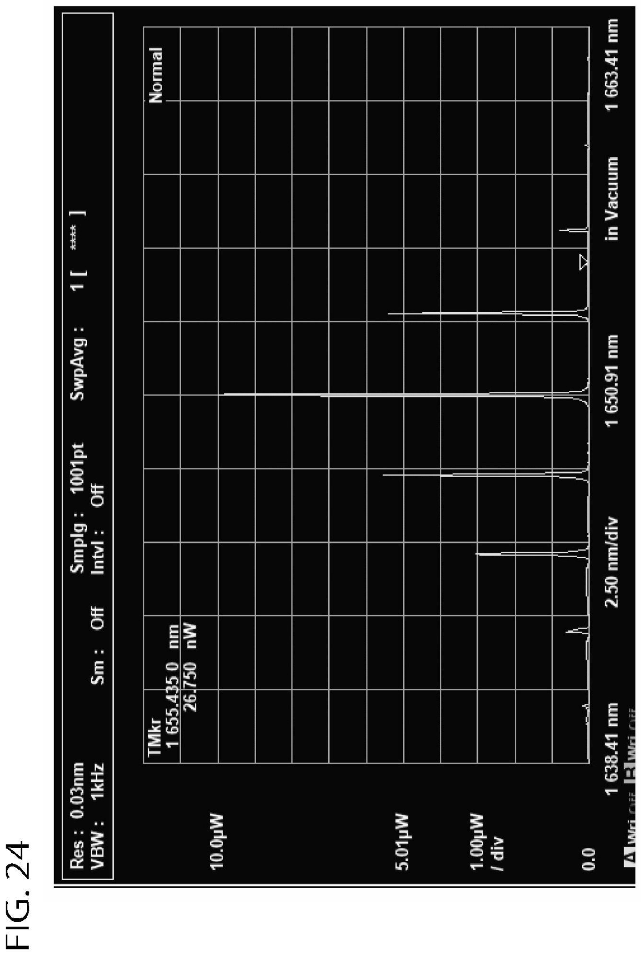

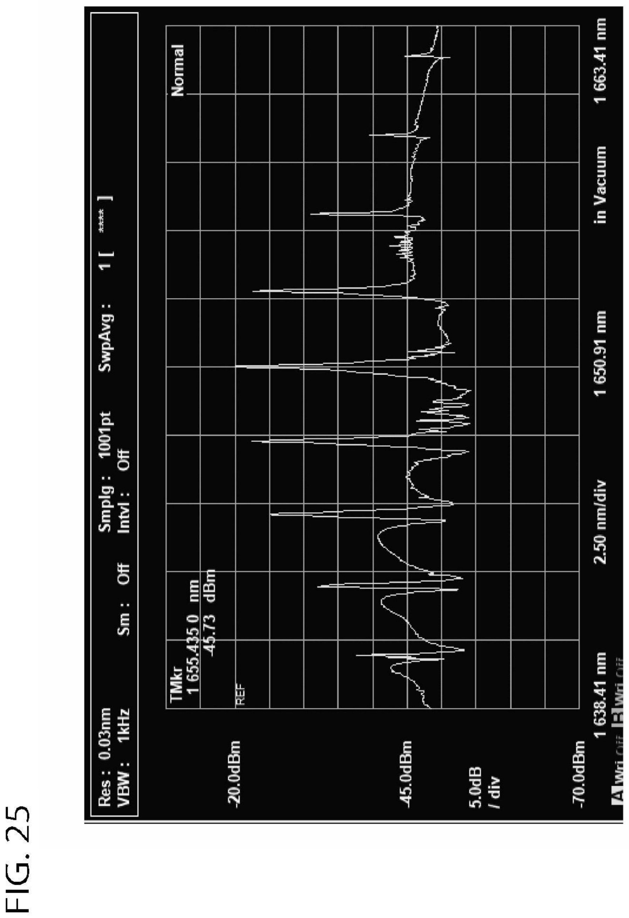

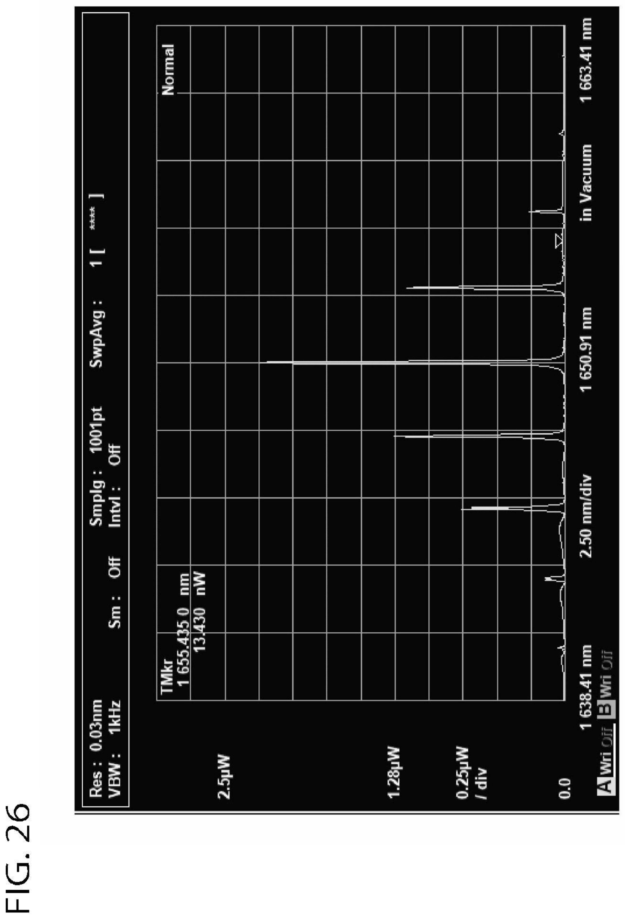

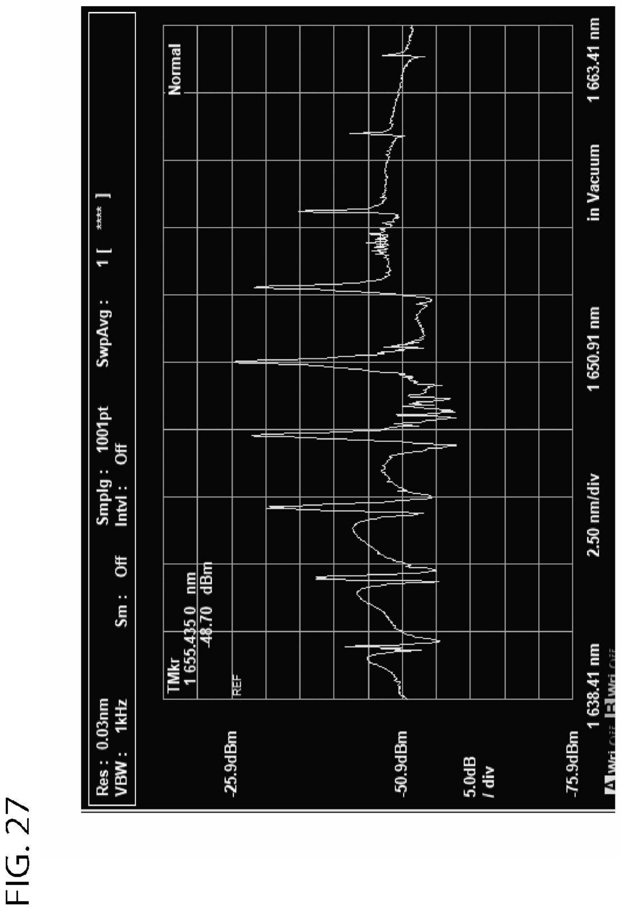

Figure 24 and Figure 25 are photographs showing the waveform and intensity of the optical spectrum when the second gas cell is not passed through. Figure 25 is a logarithmic representation of Figure 24. Figure 26 and Figure 27 are photographs showing the waveform and intensity of the optical spectrum when the second gas cell is passed through. Figure 27 is a logarithmic representation of Figure 26.

Comparing Figure 26 and Figure 27 with Figure 24 and Figure 25, it can be seen that the intensity of the peaks decreases when passing through the second gas cell, the pedestal components remain almost the same.

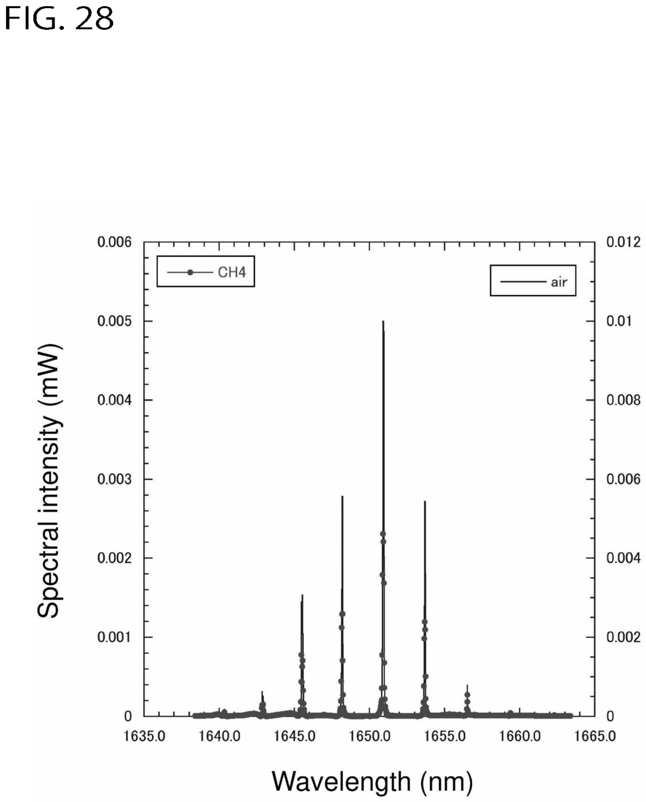

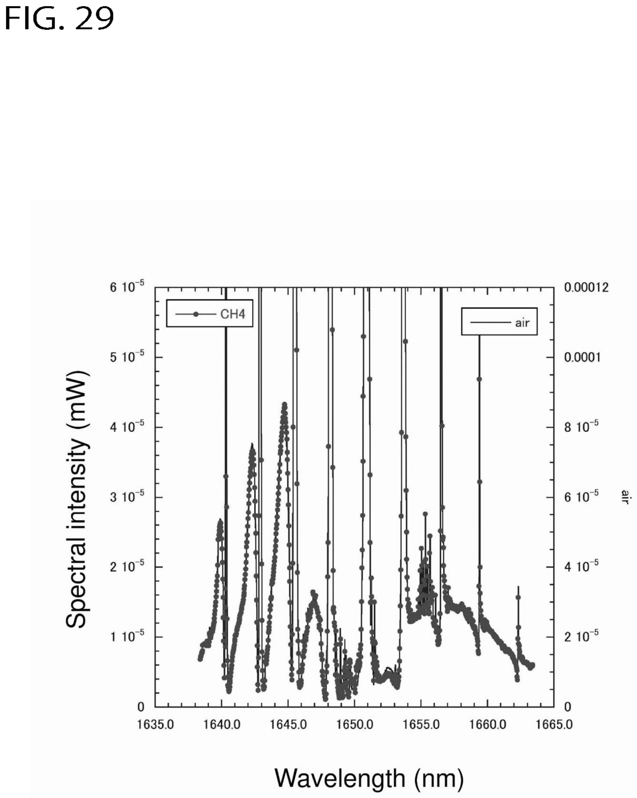

Figure 28 shows the waveform when the second gas cell is passed, represented by lines, overlaid with the data when the second gas cell is not passed, represented by dots. Figure 29 is an enlarged view of the area near zero spectral intensity in Figure 28. These figures also show that when the second gas cell is passed through, the peak intensity decreases while maintaining the shape of the peak, and the pedestal components remain almost the same.

Such a system with a second gas cell has a potential application in spectrometer, for example. In conventional spectroscopy, it is necessary to observe the entire spectral waveform because the spectral waveform includes pedestal components. In contrast, in the system shown in Figure 23, pedestal components are removed, therefore the presence or absence of the target gas can be measured, for example, by simply measuring the intensity without observing the entire spectral waveform.

### Experiment 3

Experiment 3 is an experiment to verify the effect of using small core fiber and highly nonlinear fiber as the optical fiber that constitutes the nonlinear loop mirror.

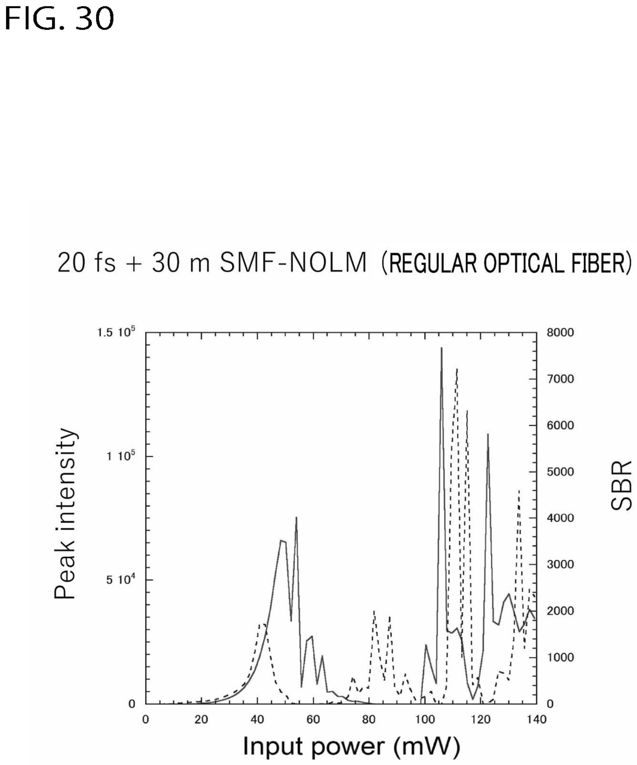

Figure 30 through Figure 33 show the simulation results. Figure 30 shows a simulation result when a regular nonlinear fiber, 30 m, is used as the optical fiber that constitutes the nonlinear loop mirror. The horizontal axis shows the input power of the pulsed light input to the nonlinear loop mirror, and the vertical axis shows the peak intensity and signal-to-background ratio of the optical spectrum output from the nonlinear loop mirror. The solid line in the graph is the peak intensity, and the dotted line is the signal-to-background ratio, the same applies below. Here, a pulsed light source is used to generate sech² type pulsed light with a repetition rate of 160 MHz, a pulse width of 20 fs, and a center wavelength of 1556 nm. Because of the high repetition rate of 160 MHz, an input power of about 50 mW is required to obtain the first peak of output intensity, as illustrated in the figure. In addition, an input power of about 40 mW is required to obtain the first peak of signal-to-background ratio.

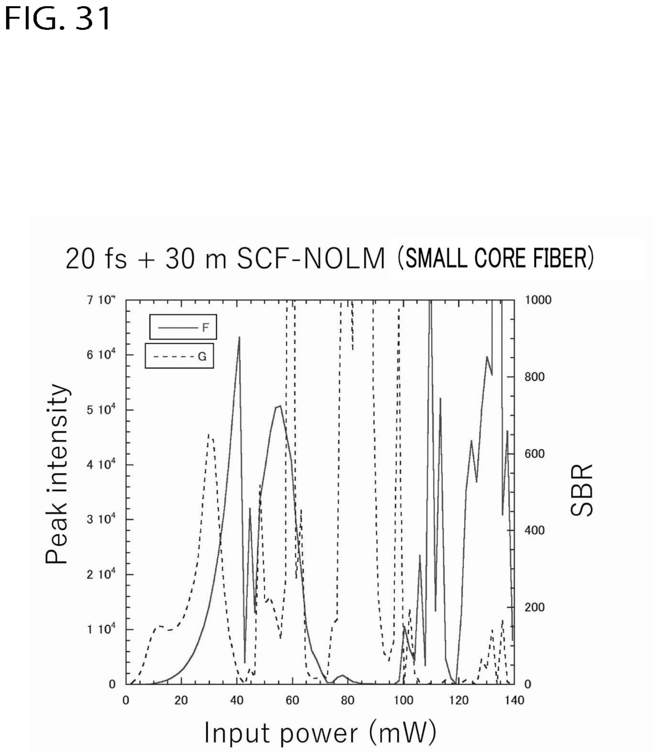

Figure 31 shows a simulation result when a small core fiber is used as the optical fiber that constitutes the nonlinear loop mirror. It can be seen that the input power required to obtain the first peak of output power intensity drops to about 40 mW. The input power required to obtain the first peak of signal-to-background ratio drops to about 30 mW.

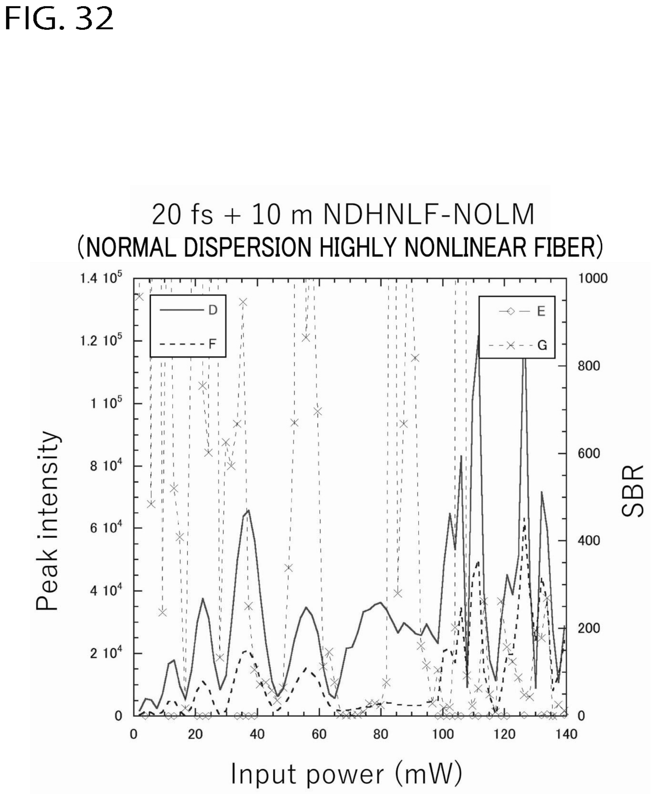

Figure 32 shows a simulation result when a highly nonlinear fiber is used as the optical fiber that constitutes the nonlinear loop mirror. It can be seen that the input power required to obtain the first peak of output power and of signal-to-background ratio drops further to about 10 mW to 20 mW.

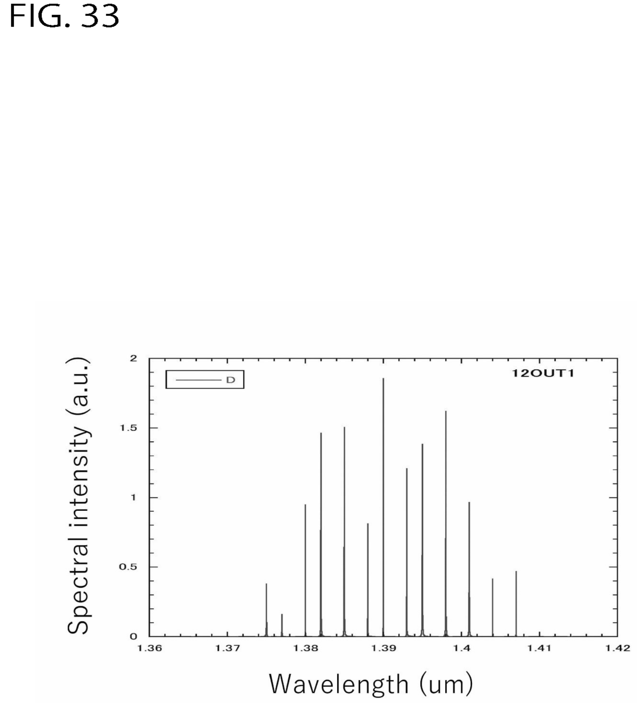

Figure 33 shows the output spectrum from the optical splitter when a highly nonlinear fiber is used as the optical fiber that constitutes the nonlinear loop mirror. It can be seen that the pedestal components are effectively removed in both peaks.

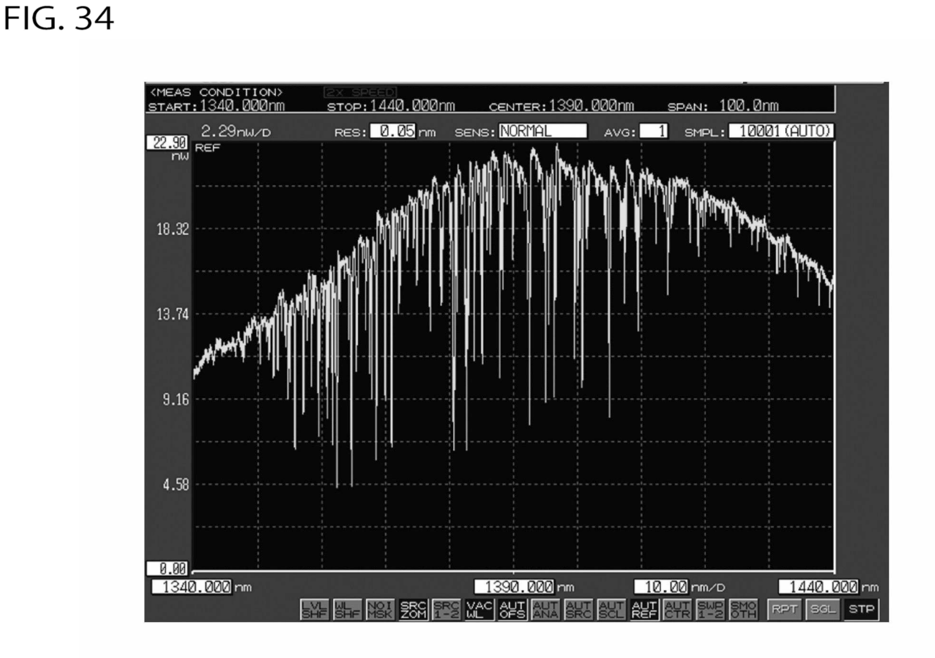

Figure 34 through Figure 36 show the experimental results. Figure 34 shows the absorption of pulsed light through the gas cell of the multi pass cell.

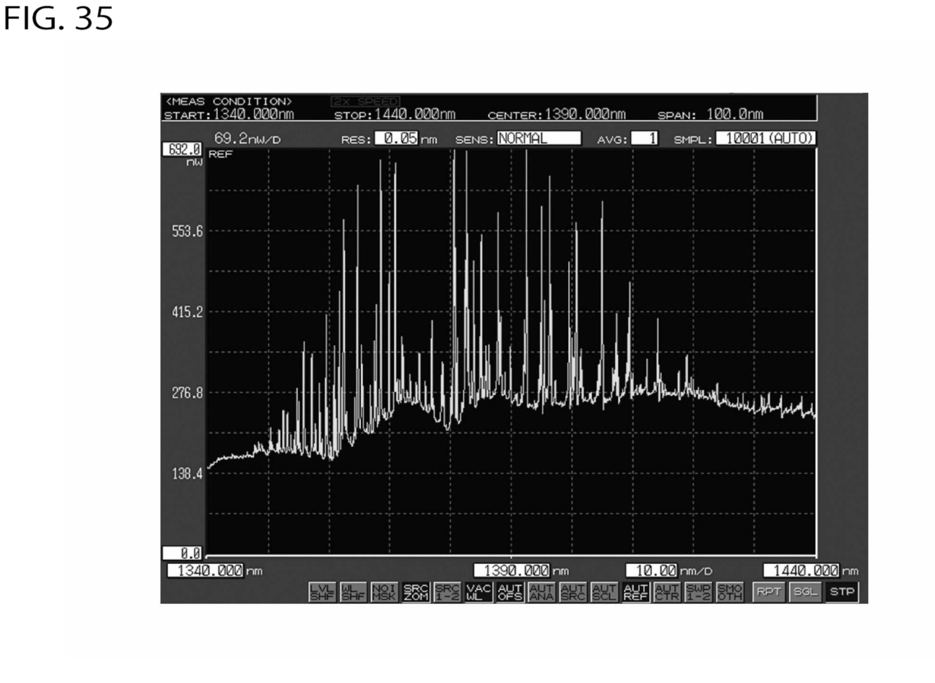

Figure 35 shows the pulsed light, where dips in Figure 34 were converted to peaks by a highly nonlinear fiber.

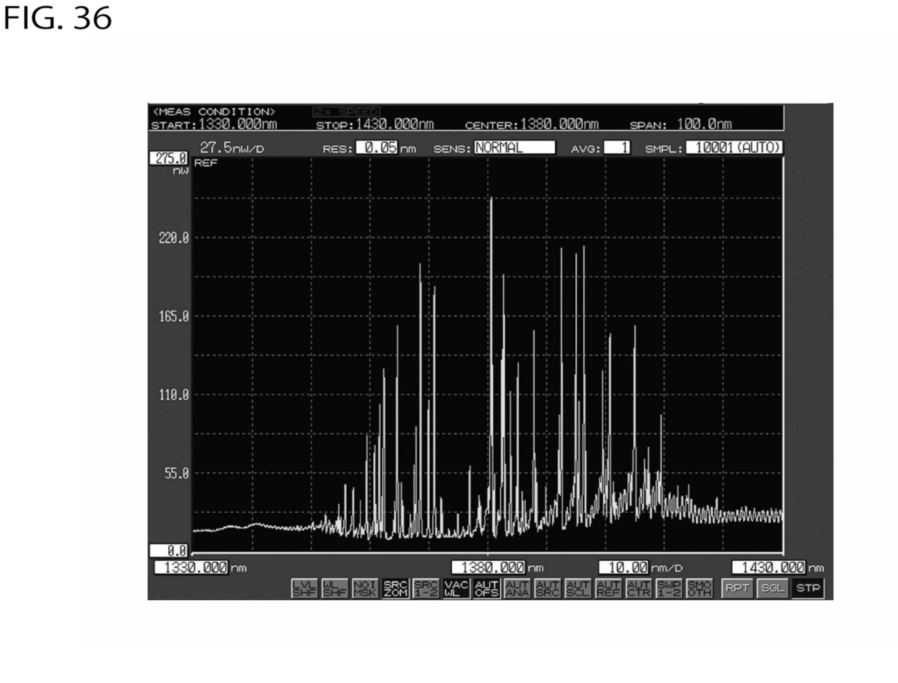

Figure 36 shows the spectrum of the pulsed light interfered by a nonlinear loop mirror configured with a highly nonlinear fiber. As illustrated, it can be seen that the pedestal components are effectively removed in both peaks.

### Simulation 4

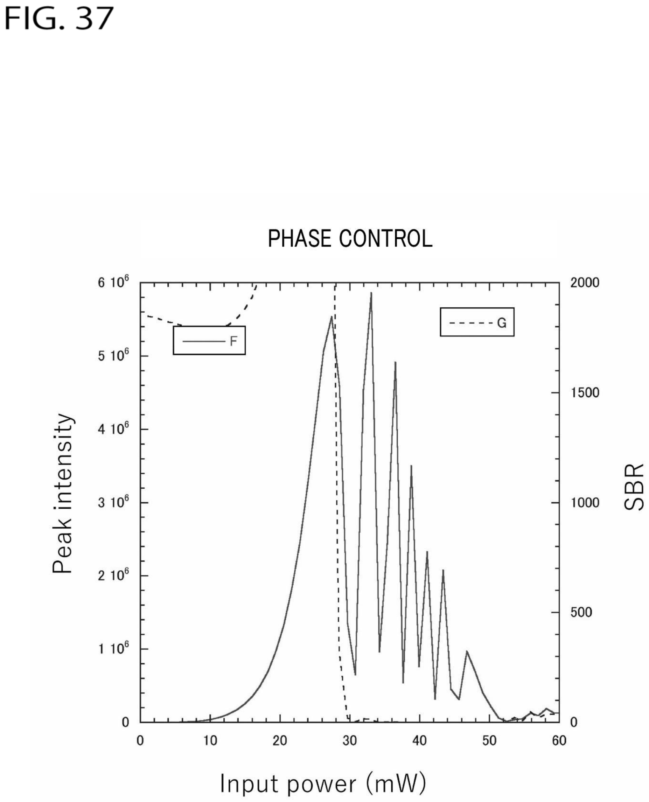

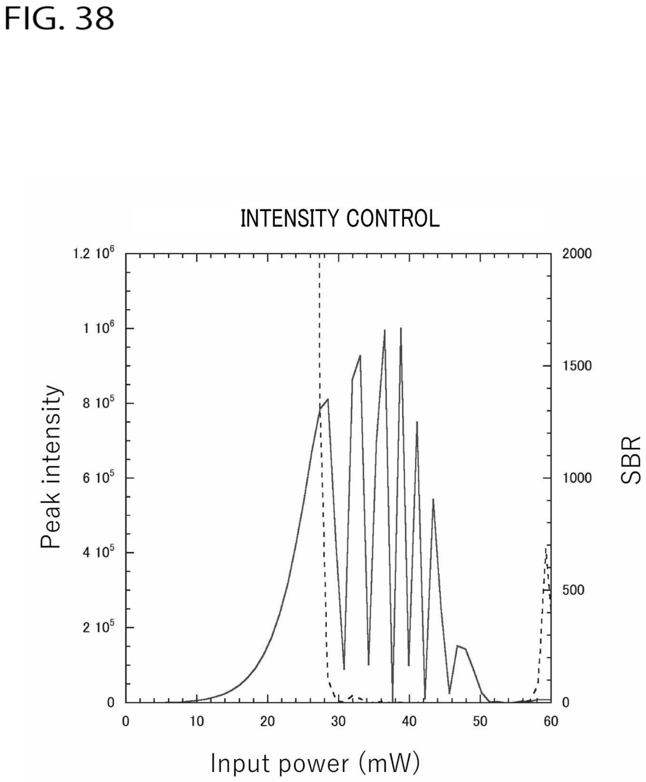

Simulation 4 verifies the effect of spectral control by the spectral controller. The results are shown in Figure 37 through Figure 45. Figure 37 is a graph showing the result of phase control by the spectrum controller. Figure 38 is a graph showing the result of intensity control by the spectrum controller.

As shown in Figure 37 and Figure 38, when spectral control is performed by the spectral controller, phase modulation produces peaks that are five to six times larger than intensity modulation.

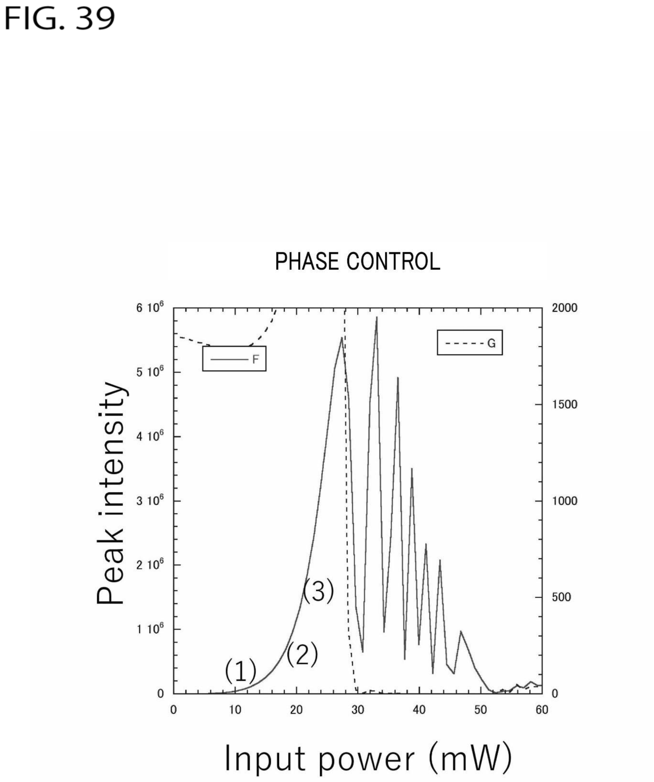

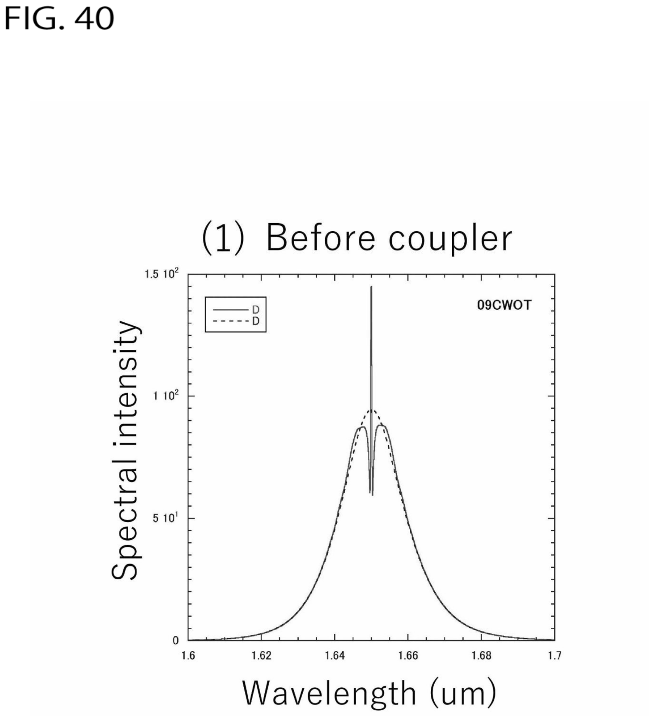

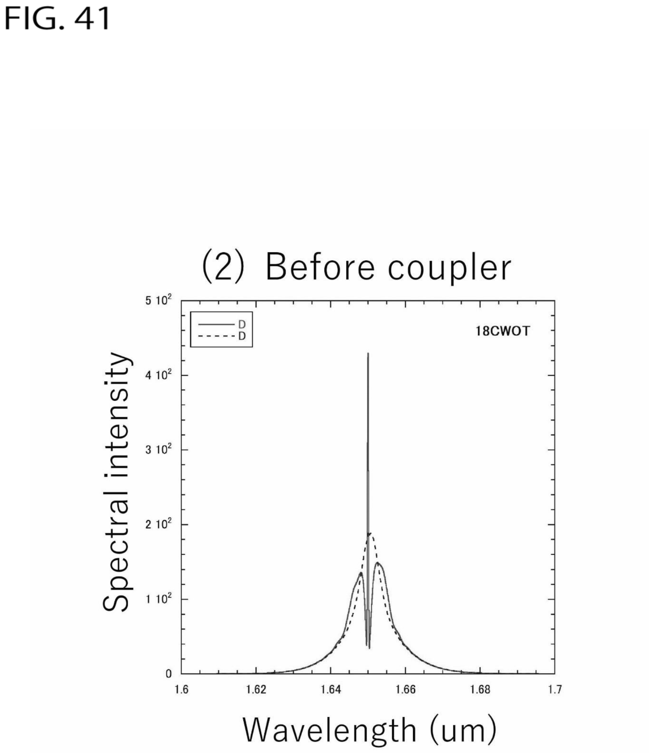

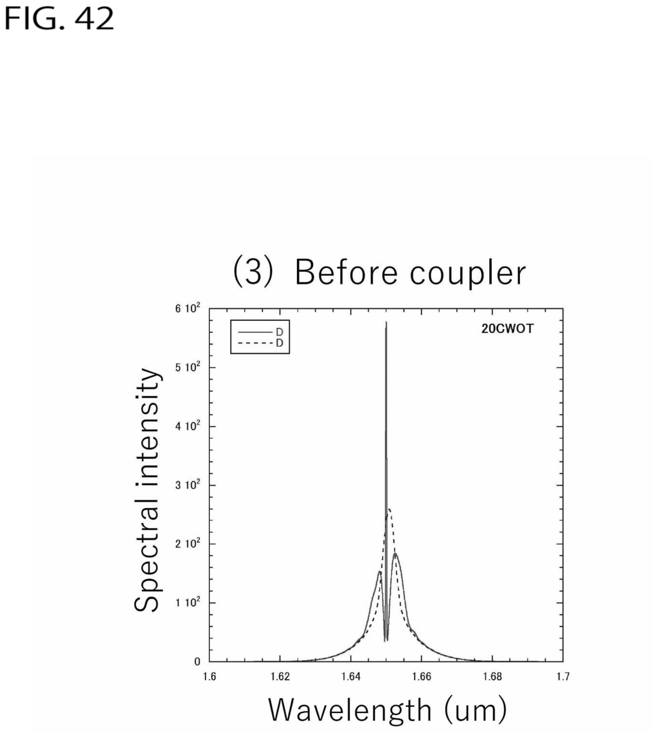

In the following simulations, the phase modulation shall be given only in the center of the spectrum. Figure 40 shows the spectrum of the pulsed light before input to the optical splitter in (1) of Figure 39. The solid line is the signal of light that followed the nonlinear loop mirror in Figure 1, for example, in a clockwise direction and the dotted line is the signal of light that followed it in a counterclockwise direction, the same applies below. Figure 41 shows the spectrum of the pulsed light before input to the optical splitter in (2) of Figure 39. Figure 42 shows the spectrum of the pulsed light before input to the optical splitter in (3) of Figure 39.

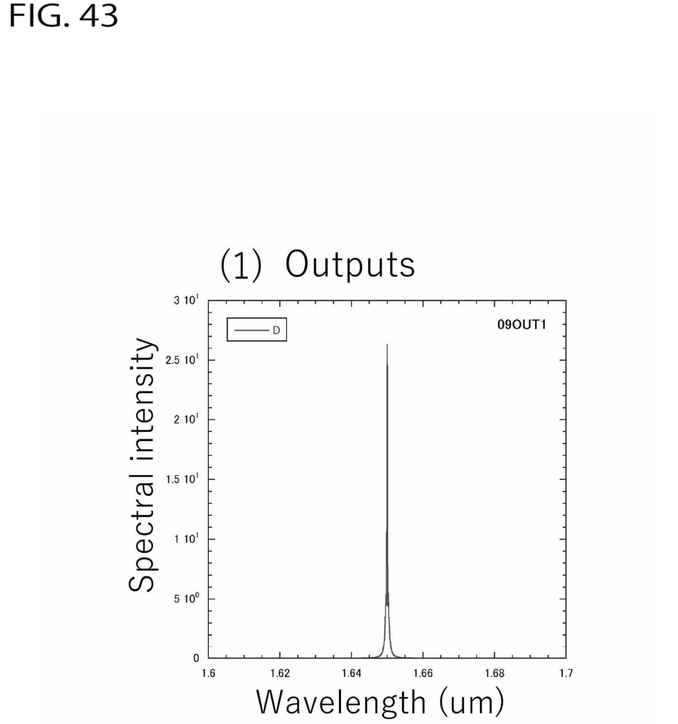

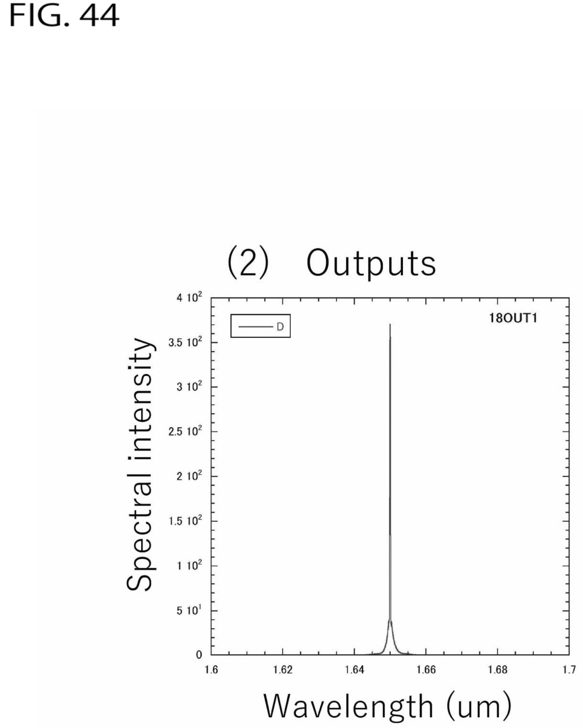

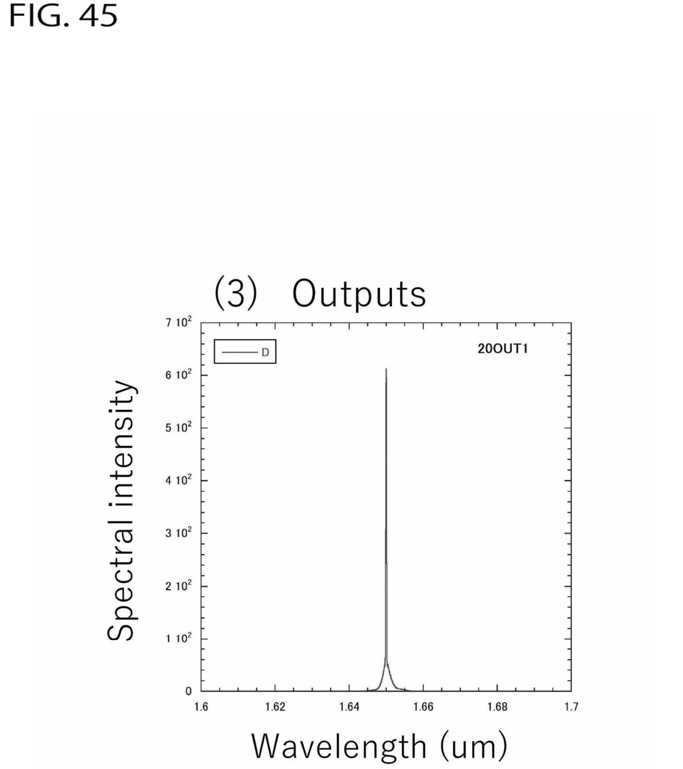

Figure 43 shows the spectrum of the pulsed light output from the optical splitter in (1) of Figure 39. Figure 44 shows the spectrum of the pulsed light output from the optical splitter in (2) of Figure 39. Figure 45 shows the spectrum of the pulsed light output from the optical splitter in (3) of Figure 39. It can be seen that the spectrum of the pulsed light output from the optical splitter at all input powers of (1), (2) and (3) in Fig. 39 shows that the pedestal components are effectively eliminated.

Various aspects of the present disclosure The following is a summary of each aspect of the present disclosure. The optical spectrum generator of a certain aspect of the present disclosure comprises a pulsed light source that generates pulsed light, an optical modulator that modulates the pulsed light of a predetermined wavelength from the pulsed light source and a nonlinear loop mirror comprising an optical splitter and a loop-shaped optical fiber connected to two ends on the same side of the optical splitter. The optical modulator is arranged on the loop of the nonlinear loop mirror. The optical fiber of the nonlinear loop mirror generates a peak in the pulsed light modulated by the optical modulator due to a nonlinear effect. The optical path length from the optical splitter to the optical modulator is different when following the loop of the nonlinear loop mirror in a clockwise direction and when following the loop of the nonlinear loop mirror in a counterclockwise direction.

According to this aspect, it is possible to generate an optical spectrum with low pedestal component and high intensity.

In one aspect, the modulation of the pulsed light is an intensity modulation.

In one aspect, the modulation of the pulsed light is a phase modulation.

In one aspect, the optical modulator generates modulation at a predetermined wavelength.

In one aspect, the optical modulator generates modulation at a predetermined plurality of wavelengths.

In one aspect, the predetermined plurality of wavelengths are discretely and equally spaced.

According to this aspect, it is possible to generate a discretely and equally spaced plurality of dips using an optical modulator.

In one aspect, the optical modulator modulates the pulsed light at a predetermined wavelengths to generate a dip and the nonlinear effect converts the dip into a peak.

According to this aspect, it is possible to generate a peak from a dip generated by an optical modulator.

In one aspect, the optical fiber constituting the nonlinear loop mirror is a highly nonlinear fiber.

According to this aspect, it is possible to generate a peak at lower intensity.

In one aspect, the optical fiber constituting the nonlinear loop mirror is a small core fiber.

According to this aspect, it is possible to generate a peak at lower intensity.

In one aspect, the optical modulator is a gas cell.

According to this aspect, it is possible to generate a dip using the absorption of gas.

In one aspect, the optical modulator is a multipath cell.

According to this aspect, stronger absorption can be obtained with the same amount of gas.

In one aspect, gas in the gas cell is methane, ethane, hydrogen cyanide, carbon monoxide, carbon dioxide, acetylene, nitrogen oxide or water vapor, or a mixture of these gases.

According to this aspect, it is possible to constitute a gas cell with a specific type of gas.

In one aspect, the optical modulator is a spectrum controller, such as LCOS.

According to this aspect, it is possible to perform modulation on a spectrum-by-spectrum basis.

In one aspect, the optical spectrum generator further comprises a wavelength shift fiber that shifts the wavelength of the pulsed light from the pulsed light source.

According to this aspect, it is possible to adjust the peak wavelength of the pulsed light to be near the wavelength of the absorption peak of the optical modulator.

In one aspect, the optical spectrum generator further comprises a first polarization controller that maintains the polarization state of the pulsed light input to the optical splitter and a second polarization controller that maintains the polarization state of the pulsed light output from the optical splitter.

According to this aspect, an optical fiber that is not a polarization maintaining fiber can be used.

In one aspect, the optical fiber of the nonlinear loop mirror is a polarization maintaining fiber.

According to this aspect, a polarization controller is not required.

In one aspect, the optical fiber of the nonlinear loop mirror is an anomalous dispersion single mode optical fiber.

According to this aspect, the shape of the generated peak can be more well-formed and clearer.

In one aspect, the ratio of the optical path length from the optical splitter to the optical modulator when following the loop of the nonlinear loop mirror in a clockwise direction to the optical path length from the optical splitter to the optical modulator when following the loop of the nonlinear loop mirror in a counterclockwise direction is greater than 7 : 3 or less than 3 : 7.

According to this aspect, it is possible to generate an optical spectrum with a strong spectral intensity and a large signal-to-background ratio.

In one aspect, the ratio of the optical path length from the optical splitter to the optical modulator when following the loop of the nonlinear loop mirror in a clockwise direction to the optical path length from the optical splitter to the optical modulator when following the loop of the nonlinear loop mirror in a counterclockwise direction is greater than 9 : 1 or less than 1 : 9.

According to this aspect, it is possible to generate an optical spectrum with a stronger spectral intensity and a larger signal-to-background ratio.

Another aspect of the present disclosure is an optical spectral amplifier. This optical spectral amplifier comprises an optical amplifier placed after the output of the optical splitter of any one of the optical spectrum generators mentioned above.

According to this aspect, it is possible to generate an optical spectrum having a peak at a specific wavelength and amplify it.

Yet another aspect of the present disclosure is an optical spectrum generation method. This method includes a step of generating pulsed light using a pulsed light source, a step of modulating the pulsed light of a predetermined wavelength from the pulsed light source using an optical modulator and a step of generating a peak in the pulsed light modulated by the optical modulator by a nonlinear effect of a nonlinear loop mirror comprising an optical splitter and a loop-shaped optical fiber connected to the two ends on the same side of the optical splitter. The optical path length from the optical splitter to the optical modulator is different when following the loop of the nonlinear loop mirror in a clockwise direction and when following the loop of the nonlinear loop mirror in a counterclockwise direction.

According to this aspect, it is possible to generate an optical spectrum with low pedestal component and high intensity.

The above disclosure has been described based on examples. It is understood by those skilled in the art that the examples are illustrative and that various variations are possible in the combination of their respective components and respective processing processes, and that such variations are also within the scope of the present invention.

### INDUSTRIAL APPLICABILITY

The present disclosure relates to an optical spectrum generator, an optical spectrum amplifier and an optical spectrum generation method.

### REFERENCE SIGNS LIST

1 Optical spectrum generator,
2 Optical spectrum amplifier,
10 Pulsed light source,
20 Optical modulator,
21 multipath cell,
22 Input port,
23 Output port,
24 Mirror,
25 Mirror,
30 Nonlinear loop mirror,
31 Optical splitter,
32 Optical fiber,
40 Wavelength shift fiber,
51 First polarization controller,
52 Second polarization controller,
60 Optical amplifier,
71 Low pass filter,
72 Bandpass filter,
81 First semiconductor optical amplifier,
82 Second semiconductor optical amplifier,
90 Beam expander,
91 Concave mirror,
92 Diffraction grating,
93 Spectrum controller,
OPL1 Optical path length,
OPL2 Optical path length,
P1 Pulsed light,
P2 Pulsed light,
P3 Pulsed light,
P4 Pulsed light,
S1 Step of generating pulsed light,
S2 Step of modulating the pulsed light of a predetermined wavelength,
S3 Step of generating a peak in the modulated pulsed light, T1 Terminal,
T2 Terminal,
T3 Terminal,
T4 Terminal,
WL1 Wave length,
WL2 Wave length.

## Claims

1. An optical spectrum generator, comprising:
a pulsed light source that generates pulsed light;
an optical modulator that modulates the pulsed light of a predetermined wavelength from the pulsed light source; and
a nonlinear loop mirror comprising an optical splitter and a loop-shaped optical fiber connected to two ends on the same side of the optical splitter,
wherein the optical modulator is arranged on the loop of the nonlinear loop mirror,
wherein the optical fiber of the nonlinear loop mirror generates a peak in the pulsed light modulated by the optical modulator due to a nonlinear effect and
wherein the optical path length from the optical splitter to the optical modulator is different when following the loop of the nonlinear loop mirror in a clockwise direction and when following the loop of the nonlinear loop mirror in a counterclockwise direction.

2. The optical spectrum generator according to claim 1,
wherein the modulation of the pulsed light is an intensity modulation.

3. The optical spectrum generator according to claim 1,
wherein the modulation of the pulsed light is a phase modulation.

4. The optical spectrum generator according to claim 1,
wherein the optical modulator generates modulation at a predetermined wavelength.

5. The optical spectrum generator according to claim 4,
wherein the optical modulator generates modulation at a predetermined plurality of wavelengths.

6. The optical spectrum generator according to claim 5,
wherein the predetermined plurality of wavelengths are discretely and equally spaced.

7. The optical spectrum generator according to claim 1,
wherein the optical modulator modulates the pulsed light at a predetermined wavelengths to generate a dip and
wherein the nonlinear effect converts the dip into a peak.

8. The optical spectrum generator according to claim 1,
wherein the optical fiber constituting the nonlinear loop mirror is a highly nonlinear fiber.

9. The optical spectrum generator according to claim 1,
wherein the optical fiber constituting the nonlinear loop mirror is a small core fiber.

10. The optical spectrum generator according to claim 1,
wherein the optical modulator is a gas cell.

11. The optical spectrum generator according to claim 10,
wherein the optical modulator is a multipath cell.

12. The optical spectrum generator according to claim 10,
wherein gas in the gas cell is methane, ethane, hydrogen cyanide, carbon monoxide, carbon dioxide, acetylene, nitrogen oxide or water vapor, or a mixture of these gases.

13. The optical spectrum generator according to claim 1,
wherein the optical modulator is a spectrum controller.

14. The optical spectrum generator according to claim 1, further comprising:
a wavelength shift fiber that shifts the wavelength of the pulsed light from the pulsed light source.

15. The optical spectrum generator according to claim 1, further comprising:
a first polarization controller that maintains the polarization state of the pulsed light input to the optical splitter; and
a second polarization controller that maintains the polarization state of the pulsed light output from the optical splitter.

16. The optical spectrum generator according to claim 1,
wherein the optical fiber of the nonlinear loop mirror is a polarization maintaining fiber.

17. The optical spectrum generator according to claim 1,
wherein the optical fiber of the nonlinear loop mirror is an anomalous dispersion single mode optical fiber.

18. The optical spectrum generator according to claim 1,
wherein the ratio of the optical path length from the optical splitter to the optical modulator when following the loop of the nonlinear loop mirror in a clockwise direction to the optical path length from the optical splitter to the optical modulator when following the loop of the nonlinear loop mirror in a counterclockwise direction is greater than 7 : 3 or less than 3 : 7.

19. The optical spectrum generator according to claim 1,
wherein the ratio of the optical path length from the optical splitter to the optical modulator when following the loop of the nonlinear loop mirror in a clockwise direction to the optical path length from the optical splitter to the optical modulator when following the loop of the nonlinear loop mirror in a counterclockwise direction is greater than 9 : 1 or less than 1 : 9.

20. An optical spectrum amplifier, comprising:
an optical amplifier placed after the output of the optical splitter of the optical spectrum generator according to any one of claims 1 to 18.

21. An optical spectrum generation method, including:
generating pulsed light using a pulsed light source;
modulating the pulsed light of a predetermined wavelength from the pulsed light source using an optical modulator; and
generating a peak in the pulsed light modulated by the optical modulator by a nonlinear effect of a nonlinear loop mirror comprising an optical splitter and a loop-shaped optical fiber connected to the two ends on the same side of the optical splitter,
wherein the optical path length from the optical splitter to the optical modulator is different when following the loop of the nonlinear loop mirror in a clockwise direction and when following the loop of the nonlinear loop mirror in a counterclockwise direction.
